(19) Europäisches Patentamt
European Patent Office
Office européen des brevets

(11) **EP 4 583 435 A1**

(12) **EUROPEAN PATENT APPLICATION**
published in accordance with Art. 153(4) EPC

(43) Date of publication:
**09.07.2025 Bulletin 2025/28**

(21) Application number: **23867404.8**

(22) Date of filing: **15.09.2023**

(51) International Patent Classification (IPC):
**H04L 1/00** (2006.01)    **H04W 72/00** (2023.01)

(52) Cooperative Patent Classification (CPC):
**H04L 1/00; H04W 28/26; H04W 72/00;
H04W 74/0808**

(86) International application number:
**PCT/CN2023/119025**

(87) International publication number:
**WO 2024/061115 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.09.2022 CN 202211140291
30.09.2022 CN 202211210216**

(71) Applicant: **Huawei Technologies Co., Ltd.
Shenzhen, Guangdong 518129 (CN)**

(72) Inventors:
• **LIU, Yun
Shenzhen, Guangdong 518129 (CN)**
• **LI, Chao
Shenzhen, Guangdong 518129 (CN)**
• **XUE, Lixia
Shenzhen, Guangdong 518129 (CN)**
• **JIAO, Ruicheng
Shenzhen, Guangdong 518129 (CN)**

(74) Representative: **Maiwald GmbH
Engineering
Elisenhof
Elisenstrasse 3
80335 München (DE)**

(54) **SIDELINK COMMUNICATION METHOD AND APPARATUS**

(57)    Embodiments of this application provide a sidelink communication method and apparatus. According to this application, if a first terminal device receives a plurality of pieces of data on a plurality of resource block sets, and resources for feedback information corresponding to the plurality of pieces of data are located in the plurality of resource block sets and a first time unit, the first terminal device sends, in the first time unit and on each of the plurality of resource block sets, feedback information corresponding to at least one of the plurality of pieces of data, to ensure that a feedback resource on each of the plurality of resource block sets is not wasted. In addition, when the first time unit on at least one of the plurality of resource block sets belongs to one channel occupancy time, because the first time unit on each of the plurality of resource block sets is occupied by the first terminal device, another device cannot successfully preempt a channel in the first time unit, thereby avoiding interruption of the channel occupancy time.

Method 500

FIG. 5

**Description**

This application claims priorities to Chinese Patent Application No. 202211140291.5, filed with the China National Intellectual Property Administration on September 20, 2022 and entitled "FEEDBACK CHANNEL TRANSMISSION METHOD AND COMMUNICATION DEVICE", and to Chinese Patent Application No. 202211210216.1, filed with the China National Intellectual Property Administration on September 30, 2022 and entitled "SIDELINK COMMUNICATION METHOD AND APPARATUS", both of which are incorporated herein by reference in their entireties.

**TECHNICAL FIELD**

Embodiments of this application relate to the field of sidelink communication, and more specifically, to a sidelink communication method and apparatus.

**BACKGROUND**

In a sidelink (sidelink, SL) system, a terminal device may communicate with another terminal device in a resource pool. A physical sidelink feedback channel (physical sidelink feedback channel, PSFCH) resource is periodically configured in the resource pool. A physical sidelink shared channel (physical sidelink shared channel, PSSCH) resource used for data transmission has a corresponding mapping relationship with the periodically configured PSFCH resource.

In an unlicensed spectrum, a terminal device contends for a channel in a listen-before-talk (listen-before-talk, LBT) manner, to obtain a channel occupancy time (channel occupancy time, COT), and communicates with another terminal device based on a resource in the COT.

If a PSFCH resource in the COT is not used, a waste may occur, and even a COT of an original terminal device may be interrupted.

**SUMMARY**

Embodiments of this application provide a sidelink communication method and apparatus, to reduce a COT interruption problem that is caused when a terminal device performs communication based on a sidelink.

According to a first aspect, a sidelink communication method is provided. The method may be performed by a terminal device, or may be performed by a component (such as a chip or a circuit) of the terminal device. This is not limited. For ease of description, the following uses an example in which the method is performed by a first terminal device for description.

The method may include: The first terminal device receives a plurality of pieces of data on S resource block sets, where resources used to transmit M pieces of feedback information are located in a first time unit and the S resource block sets, the M pieces of feedback information correspond to the plurality of pieces of data, and both S and M are integers greater than 1; and the first terminal device sends at least one of N pieces of feedback information in the first time unit and on each of the S resource block sets, where the N pieces of feedback information belong to the M pieces of feedback information, and N is a positive integer less than or equal to M.

Based on the foregoing technical solution, if the first terminal device receives the plurality of pieces of data on the S resource block sets, and the resources for the M pieces of feedback information corresponding to the plurality of pieces of data are located in the S resource block sets and the first time unit, the first terminal device sends at least one piece of feedback information on each of the S resource block sets, so that a waste of feedback resources in the resource block sets can be avoided.

In addition, when a first time unit on a resource block set in the S resource block sets belongs to one channel occupancy time (channel occupancy time, COT), because the first terminal device sends at least one piece of feedback information on each of the S resource block sets, another terminal device cannot successfully preempt a channel in the first time unit, and therefore, COT interruption is not caused.

With reference to the first aspect, in some implementations of the first aspect, the N pieces of feedback information include N1 pieces of feedback information, the N1 pieces of feedback information include feedback information with a highest priority transmitted on a $s^{th}$ resource block set in the S resource block sets, feedback information transmitted on the $s^{th}$ resource block set belongs to the M pieces of feedback information, N1 is a positive integer, and s=1, 2, ..., S, where

s=1, 2, ..., S represents that a value of s is each value in 1, 2, ..., S. A priority of feedback information is a priority of data corresponding to the feedback information. In other words, a priority value of the feedback information is the same as a priority value of the data corresponding to the feedback information.

Based on the foregoing technical solution, the first terminal device may preferentially feed back feedback information with a highest priority transmitted on each resource block set, ensuring that a high-priority service can be

**EP 4 583 435 A1**

preferentially transmitted, improving user experience quality.

For example, a manner in which the first terminal device determines the N1 pieces of feedback information is as follows: The first terminal device determines, based on the M pieces of feedback information, S feedback information sets corresponding to the S resource block sets, where a $s^{th}$ feedback information set in the S feedback information sets includes at least one of the M pieces of feedback information, and the $s^{th}$ resource block set is used to transmit feedback information included in a feedback information set corresponding to the $s^{th}$ resource block set; and the first terminal device determines the N1 pieces of feedback information based on feedback information with a highest priority included in each of the S feedback information sets.

In other words, the first terminal device groups the M pieces of feedback information based on resource block sets used to transmit feedback information, so that the first terminal device selects feedback information with a highest priority in each group, to obtain the N1 pieces of feedback information.

For example, another manner in which the first terminal device determines the N1 pieces of feedback information is as follows: The first terminal device determines the N1 pieces of feedback information from the M pieces of feedback information in descending order of priorities of feedback information.

The N1 pieces of feedback information determined by the first terminal device in descending order of the priorities of the feedback information include the following feedback information: feedback information with a highest priority in the M pieces of feedback information, and an mth piece of feedback information in the M pieces of feedback information. A resource block set used to transmit the mth piece of feedback information does not overlap a resource block set used to transmit feedback information whose priority is higher than or equal to that of the mth piece of feedback information, where m is a positive integer, and $1 \leq m \leq M$.

In other words, the first terminal device sequentially determines, in descending order of the priorities of the feedback information, whether to add a first piece of feedback information, a second piece of feedback information, ..., and an Mth piece of feedback information that are ranked in order of the priorities in the M pieces of feedback information into the N1 pieces of feedback information. The first piece of feedback information has a highest priority, so that the first terminal device determines to add the first piece of feedback information into the N1 pieces of feedback information. For an mth piece of feedback information, $2 \leq m \leq M$, and if a resource block set used to transmit the mth piece of feedback information does not overlap resource block sets used to transmit the first m-1 pieces of feedback information, the first terminal device adds the mth piece of feedback information into the N1 pieces of feedback information; or if the resource block set used to transmit the mth piece of feedback information overlaps the resource block sets used to transmit the first m-1 pieces of feedback information, the first terminal device does not add the mth piece of feedback information into the N1 pieces of feedback information.

With reference to the first aspect, in some manners of the first aspect, if $N_{max}>N1$, the N pieces of feedback information further include N2 pieces of feedback information in M' pieces of feedback information, a sum of transmit power corresponding to the N pieces of feedback information is less than maximum transmit power supported by the first terminal device, and/or N is less than or equal to $N_{max}$, the M' pieces of feedback information include feedback information other than the N1 pieces of feedback information in the M pieces of feedback information, and $N_{max}$ represents a maximum quantity of feedback information capable of being simultaneously sent by the first terminal device.

Based on the foregoing technical solution, after the first terminal device selects the N1 pieces of feedback information, if a quantity of the N1 pieces of feedback information is less than a capability upper limit of the first terminal device, the first terminal device selects the N2 pieces of feedback information from the M' pieces of feedback information, so as to send a larger quantity of feedback information without exceeding the capability upper limit of the first terminal device, thereby improving transmission efficiency.

With reference to the first aspect, in some implementations of the first aspect, the first terminal device determines, based on the M pieces of feedback information, S feedback information sets corresponding to the S resource block sets, where a $s^{th}$ feedback information set in the S feedback information sets includes at least one of the M pieces of feedback information, a $s^{th}$ resource block set is used to transmit feedback information included in a feedback information set corresponding to the $s^{th}$ resource block set, and s=1, 2, ..., S; and the first terminal device determines the N pieces of feedback information based on $N_{\max}^{set}$ and the S feedback information sets, where a quantity of feedback information that is in the N pieces of feedback information and that belongs to a same feedback information set does not exceed $N_{\max}^{set}$, and $N_{\max}^{set}$ represents a maximum quantity of feedback information capable of being simultaneously sent by the first terminal device on one resource block set.

Based on the foregoing technical solution, the first terminal device may select the N pieces of feedback information from the M pieces of feedback information for transmission at a granularity of a resource block set, and a quantity of feedback information transmitted on each resource block set does not exceed the maximum quantity of feedback information capable of being simultaneously sent on one resource block set by the first terminal device. Therefore, a waste of feedback resources on the resource block set can be avoided, and mutual impact between resource

3

block sets is avoided.

For example, a priority of feedback information that is in the N pieces of feedback information and that belongs to the sth feedback information set is higher than or equal to a priority of feedback information that is in the sth feedback information set and that does not belong to the N pieces of feedback information.

In other words, the first terminal device selects, from the M pieces of feedback information in descending order of the priorities of the feedback information at a granularity of a resource block set, at least one piece of feedback information transmitted on each resource block set.

Based on the foregoing technical solution, the first terminal device may preferentially feed back feedback information with a highest priority transmitted on each resource block set, ensuring that a high-priority service can be preferentially transmitted, improving user experience quality.

With reference to the first aspect, in some implementations of the first aspect, the first terminal device sends, to a network device, at least one of the following: a quantity $N_{set}$ of resource block sets supported by the first terminal device, and the maximum quantity $N_{\max}^{set}$ of feedback information capable of being simultaneously sent by the first terminal device on one resource block set.

$N_{set}$ It may also be understood as that the first terminal device is capable of simultaneously sending feedback information on $N_{set}$ resource block sets.

For example, if the network device knows a maximum quantity $N_{\max}$ of feedback information capable of being simultaneously sent by the first terminal device, the first terminal device may send, to the network device, the quantity $N_{set}$ of resource block sets supported by the first terminal device. Correspondingly, the network device may determine that $N_{\max}^{set}$ is equal to a ratio of $N_{\max}$ to $N_{set}$.

For example, if the network device knows a maximum quantity $N_{\max}$ of feedback information capable of being simultaneously sent by the first terminal device, the first terminal device may send, to the network device, the maximum quantity $N_{\max}^{set}$ of feedback information capable of being simultaneously sent by the first terminal device on one resource block set. Correspondingly, the network device may determine that $N_{set}$ is equal to a ratio of $N_{\max}$ to $N_{\max}^{set}$.

With reference to the first aspect, in some implementations of the first aspect, before the first terminal device sends the N pieces of feedback information, the method further includes: The first terminal device determines that the first time unit on each of the S resource block sets belongs to one COT.

It should be noted that first time units on different resource block sets in the S resource block sets belong to a same COT or different COTs. This is not limited in embodiments of this application.

Based on the foregoing technical solution, if the first terminal device receives a plurality of pieces of data in Y resource block sets, and a capability of the first terminal device does not support sending of at least one piece of feedback information on each of the Y resource block sets, when first time units in resource block sets of the S resource block sets belong to one COT, the first terminal device preferentially ensures that at least one piece of feedback information is sent on each of the S resource block sets, so as to avoid COT interruption without exceeding the capability of the first terminal device. Y is an integer greater than 1.

With reference to the first aspect, in some implementations of the first aspect, a phase rotation value corresponding to an nth piece of feedback information in the N pieces of feedback information is related to an index of a resource block set used to transmit the nth piece of feedback information, where n=1, 2, ..., N.

n=1, 2, ..., N represents that a value of n is each value in 1, 2, ..., S.

Based on the foregoing technical solution, the first terminal device determines, based on an index of a resource block set used to transmit feedback information, a phase rotation value corresponding to the feedback information, so as to help reduce a peak to average power ratio (peak to average power radio, PAPR). For example, if the first terminal device simultaneously sends feedback information on at least two resource block sets, when the at least two resource block sets have different indexes, feedback information transmitted on resource block sets of the at least two resource block sets corresponds to different phase rotation values, so that the PAPR can be reduced.

For example, the phase rotation value $\alpha_l^n$ corresponding to the nth piece of feedback information is represented as

$$\alpha_l^n = \frac{2\pi}{N_{sc}^{RB}}((m_0 + \Delta_{set}^n * i_{set}^n + m_{cs} + n_{cs}(n_{s,f}^\mu, l+l')) \bmod N_{sc}^{NB})$$

; or $\alpha_l^n$ is represented as

$$\alpha_l^n = \frac{2\pi}{N_{sc}^{RB}}((m_0 + \Delta_{set}^n * i^n + \Delta_{RB}^n * i_{RB}^n + m_{cs} + n_{cs}(n_{s,f}^\mu, l+l')) \bmod N_{sc}^{NB})$$

, where $\Delta_{set}^n$ represents an offset corresponding to the resource block set used to transmit the nth piece of feedback information, $i_{set}^n$ represents an index of the resource block set used to transmit the n<sup>th</sup> piece of feedback information, $\Delta_{RB}^{n}$ represents an offset corresponding to a resource block that is included in the resource block set used to transmit the n<sup>th</sup> piece of feedback information and that is used to transmit the n<sup>th</sup> piece of feedback information, $i^n$ represents an index of a physical resource block in an interlace included in the resource block set used to transmit the n<sup>th</sup> piece of feedback information, $i_{RB}^{n}$ represents an index of the resource block that is included in the resource block set used to transmit the n<sup>th</sup> piece of feedback information and that is used to transmit the n<sup>th</sup> piece of feedback information, $N_{sc}^{NB}$ represents a quantity of subcarriers in one resource block, $n_{s,f}^{\mu}$ represents a slot number corresponding to a subcarrier spacing $\mu$ in one radio frame, $l$ represents a number of a symbol used to transmit the n<sup>th</sup> piece of feedback information, $l=0$ represents a first symbol of a resource used to transmit the n<sup>th</sup> piece of feedback information, $l'$ represents a symbol index of the first symbol of the resource used to transmit the n<sup>th</sup> piece of feedback information in a slot, $m_0$ represents a phase of an acknowledgment (acknowledgment, ACK) sequence in a physical sidelink feedback channel (physical sidelink feedback channel, PSFCH) resource pair, $m_{cs}$ represents a phase offset of a negative acknowledgement (negative acknowledgment, NACK) sequence relative to an ACK sequence in a PSFCH resource pair, a function $n_{cs}(n_{s,f}^{\mu},l)$ is represented as $n_{cs}(n_{s,f}^{\mu},l) = \sum_{m=0}^{7} 2^m c(8N_{symb}^{slot}n_{s,f}^{\mu} + 8l + m)$, $N_{symb}^{slot}$ represents a symbol quantity in one slot, and c(i) represents a value of a sequence number i in a pseudo-random sequence.

For example, the offset corresponding to the resource block set used to transmit the n<sup>th</sup> piece of feedback information is related to one or more of the following: a quantity of resource block sets included in a resource pool, a frequency domain range of the resource pool, and a frequency domain position of the resource pool, where the resource pool includes the resource block set used to transmit the n<sup>th</sup> piece of feedback information.

When the offset corresponding to the resource block set of the n<sup>th</sup> piece of feedback information is related to one or more of the foregoing items, it is conducive to implementing feedback information transmitted in different resource pools being corresponding to different phase rotation values. Therefore, if different resource block sets in the S resource block sets are located in different resource pools, a PAPR in a feedback information transmission process can be reduced.

It may be understood that when the first terminal device sends the N pieces of feedback information on the S resource block sets, because a phase rotation value of feedback information is related to an index of a resource block set used to transmit the feedback information, a phase rotation value corresponding to the feedback information transmitted on the s<sup>th</sup> resource block set is different from a phase rotation value corresponding to feedback information transmitted on an s'<sup>th</sup> resource block set, and the s<sup>th</sup> resource block set and the s'<sup>th</sup> resource block set belong to the S resource block sets, where s=1, 2, ..., S, s'=1, 2, ..., S, and s≠s', where s'=1, 2, ..., S represents that a value of s' is each value in 1, 2, ..., S.

With reference to the first aspect, in some implementations of the first aspect, before the first terminal device sends the N pieces of feedback information, the method further includes: The first terminal device performs N3 times of listen-before-talk (listen-before-talk, LBT), where the N3 times of LBT correspond to N3 pieces of feedback information in the N pieces of feedback information, N3 is an integer, and 1<N3≤N; and that the first terminal device sends at least one of N pieces of feedback information in the first time unit and on each of the S resource block sets includes: After at least one of the N3 times of LBT succeeds, the first terminal device sends at least one of the N pieces of feedback information in the first time unit and on each of the S resource block sets.

Based on the foregoing technical solution, the first terminal device starts the N3 times of LBT for the N3 pieces of feedback information, and when at least one of the N3 times of LBT succeeds, the first terminal device sends the N pieces of feedback information, so that transmission performance can be improved. For example, if duration of the N3 times of LBT corresponding to the N3 pieces of feedback information is different, LBT with shortest duration in the N3 times of LBT succeeds first, so that the first terminal device can send the N3 pieces of feedback information as soon as possible, and does not need to send the N3 pieces of feedback information after all times of LBT succeed, thereby reducing a transmission delay of the feedback information.

With reference to the first aspect, in some implementations of the first aspect, before the first terminal device sends the N pieces of feedback information, the method further includes: The first terminal device performs one time of LBT, where the LBT corresponds to N3 pieces of feedback information in the N pieces of feedback information, N3 is an integer, and 1<N3≤N; and that the first terminal device sends at least one of N pieces of feedback information in the first time unit and on each of the S resource block sets includes: After the LBT succeeds, the first terminal device sends at least one of the N pieces of feedback information in the first time unit and on each of the S resource block sets.

Optionally, duration of the one time of LBT corresponding to the N3 pieces of feedback information is 25 μs or 16 μs. For example, if a resource for at least one of the N3 pieces of feedback information belongs to one COT, duration of the LBT started by the first terminal device for the N3 pieces of feedback information may be 25 μs or 16 μs.

Optionally, the duration of the one time of LBT corresponding to the N3 pieces of feedback information is determined by a priority value of feedback information with a highest priority in the N3 pieces of feedback information.

Based on the foregoing technical solution, the first terminal device starts the same LBT for the N3 pieces of feedback information, so that transmission performance can be improved. For example, if the duration of the one time of LBT corresponding to the N3 pieces of feedback information is determined by the priority value of the feedback information with the highest priority in the N pieces of feedback information, the first terminal device may preempt a channel by using less time, thereby reducing a transmission delay of the feedback information.

Optionally, resource block sets used to transmit the N3 pieces of feedback information are a same resource block set, or at least two resource block sets used to transmit at least two of the N3 pieces of feedback information do not overlap.

Optionally, data corresponding to the N3 pieces of feedback information is from a same second terminal device.

Based on the foregoing technical solution, if the data corresponding to the N3 pieces of feedback information is from the same second terminal device, the second terminal device may receive the N3 pieces of feedback information at the same time, to determine a result of decoding the data corresponding to the N3 pieces of feedback information by the first terminal device.

Optionally, the data corresponding to the N3 pieces of feedback information is received by the first terminal device before a target moment, and a gap between the target moment and the first time unit is a preset value.

Optionally, the data corresponding to the N3 pieces of feedback information is same data.

According to a second aspect, a sidelink communication method is provided. The method may be performed by a terminal device, or may be performed by a component (such as a chip or a circuit) of the terminal device. This is not limited. For ease of description, the following uses an example in which the method is performed by a first terminal device for description.

The method may include: The first terminal device receives a plurality of pieces of data on S resource block sets, where S is an integer greater than 1; and the first terminal device sends N pieces of feedback information in M pieces of feedback information, where the M pieces of feedback information correspond to the plurality of pieces of data, and N is a positive integer less than or equal to M, where a phase rotation value corresponding to an $n^{th}$ piece of feedback information in the N pieces of feedback information is related to an index of a resource block set used to transmit the $n^{th}$ piece of feedback information, and n=1, 2, ..., N, where

n=1, 2, ..., N represents that a value of n is each value in 1, 2, ..., S.

Based on the foregoing technical solution, the first terminal device determines, based on an index of a resource block set used to transmit feedback information, a phase rotation value corresponding to the feedback information, so as to help reduce a PAPR. For example, if the first terminal device simultaneously sends feedback information on at least two resource block sets, when the at least two resource block sets have different indexes, feedback information transmitted on resource block sets of the at least two resource block sets corresponds to different phase rotation values, so that the PAPR can be reduced.

For example, the phase rotation value $\alpha_l^n$ corresponding to the $n^{th}$ piece of feedback information is represented as

$$\alpha_l^n = \frac{2\pi}{N_{sc}^{RB}}((m_0 + \Delta_{set}^n * i_{set}^n + m_{cs} + n_{cs}(n_{s,f}^\mu, l+l')) \bmod N_{sc}^{NB})$$

; or $\alpha_l^n$ is represented as

$$\alpha_l^n = \frac{2\pi}{N_{sc}^{RB}}((m_0 + \Delta_{set}^n * i^n + \Delta_{RB}^n * i_{RB}^n + m_{cs} + n_{cs}(n_{s,f}^\mu, l+l')) \bmod N_{sc}^{NB})$$

, where $\Delta_{set}^n$ represents an offset corresponding to the resource block set used to transmit the $n^{th}$ piece of feedback information, $i_{set}^n$ represents an index of the resource block set used to transmit the $n^{th}$ piece of feedback information, $\Delta_{RB}^n$ represents an offset corresponding to a resource block that is included in the resource block set used to transmit the $n^{th}$ piece of feedback information and that is used to transmit the $n^{th}$ piece of feedback information, $i^n$ represents an index of a physical resource block in an interlace included in the resource block set used to transmit the $n^{th}$ piece of feedback information, $i_{RB}^n$ represents an index of the resource block that is included in the resource block set used to transmit the $n^{th}$ piece of feedback information and that is used to transmit the $n^{th}$ piece of feedback information, $N_{sc}^{NB}$ represents a quantity of subcarriers in one resource block, $n_{s,f}^{\mu}$ represents a slot number corresponding to a subcarrier spacing $\mu$ in one radio frame, $l$ represents a number of a symbol used to transmit the $n^{th}$ piece of feedback information, $l=0$ represents a first symbol of a resource used to transmit the $n^{th}$ piece of feedback information, $l'$ represents a symbol index of the first symbol of the resource used to transmit the $n^{th}$ piece of feedback information in a slot, $m_0$ represents a phase of an ACK sequence in a PSFCH resource pair, $m_{cs}$ represents a phase offset of a NACK sequence relative to an ACK sequence in a PSFCH resource pair, a function $n_{cs}(n_{s,f}^{\mu},l)$ is represented as $n_{cs}(n_{s,f}^{\mu},l) = \sum_{m=0}^{7} 2^m c(8N_{symb}^{slot}n_{s,f}^{\mu}+8l+m)$, $N_{symb}^{slot}$ represents a symbol quantity in one slot, and c(i) represents a value of a sequence number i in a pseudo-random sequence.

For example, the offset corresponding to the resource block set used to transmit the $n^{th}$ piece of feedback information is related to one or more of the following: a quantity of resource block sets included in a resource pool, a frequency domain range of the resource pool, and a frequency domain position of the resource pool, where the resource pool includes the resource block set used to transmit the $n^{th}$ piece of feedback information.

When the offset corresponding to the resource block set of the $n^{th}$ piece of feedback information is related to one or more of the foregoing items, it is conducive to implementing feedback information transmitted in different resource pools being corresponding to different phase rotation values. Therefore, if different resource block sets in the S resource block sets are located in different resource pools, a PAPR in a feedback information transmission process can be reduced.

With reference to the second aspect, in some implementations of the second aspect, that the first terminal device sends N pieces of feedback information includes: The first terminal device sends the N pieces of feedback information in a first time unit and at least two of the S resource block sets, where feedback information transmitted on different resource block sets in the at least two resource block sets corresponds to different phase rotation values.

According to a third aspect, a sidelink communication method is provided. The method may be performed by a terminal device, or may be performed by a component (such as a chip or a circuit) of the terminal device. This is not limited. For ease of description, the following uses an example in which the method is performed by a first terminal device for description.

The method may include: The first terminal device receives a plurality of pieces of data on S resource block sets, where S is an integer greater than 1; the first terminal device performs N3 times of LBT, where the N3 times of LBT correspond to N3 pieces of feedback information in M pieces of feedback information, the M pieces of feedback information correspond to the plurality of pieces of data, resources used to transmit the N3 pieces of feedback information are located in a same time unit, and N3 is an integer greater than 1; and after at least one of the N3 times of LBT succeeds, the first terminal device sends the N3 pieces of feedback information.

Based on the foregoing technical solution, the first terminal device starts the N3 times of LBT for the N3 pieces of feedback information, and when at least one of the N3 times of LBT succeeds, the first terminal device sends the N pieces of feedback information, so that transmission performance can be improved. For example, if duration of the N3 times of LBT corresponding to the N3 pieces of feedback information is different, LBT with shortest duration in the N3 times of LBT succeeds first, so that the first terminal device can send the N3 pieces of feedback information as soon as possible, and does not need to send the N3 pieces of feedback information after all times of LBT succeed, thereby reducing a transmission delay of the feedback information.

Optionally, resource block sets used to transmit the N3 pieces of feedback information are a same resource block set, or at least two resource block sets used to transmit at least two of the N3 pieces of feedback information do not overlap.

Optionally, data corresponding to the N3 pieces of feedback information is from a same second terminal device.

Based on the foregoing technical solution, if the data corresponding to the N3 pieces of feedback information is from the same second terminal device, the second terminal device may receive the N3 pieces of feedback information at the same time, to determine a result of decoding the data corresponding to the N3 pieces of feedback information by the first terminal device.

Optionally, the data corresponding to the N3 pieces of feedback information is received by the first terminal device before a target moment, and a gap between the target moment and the first time unit is a preset value.

The preset value may be determined by a capability of the first terminal device, and the preset value is greater than or equal to shortest duration from a moment at which the first terminal device receives the data to a moment at which the first terminal device starts to send the feedback information corresponding to the data.

Optionally, the data corresponding to the N3 pieces of feedback information is same data.

According to a fourth aspect, a sidelink communication method is provided. The method may be performed by a terminal device, or may be performed by a component (such as a chip or a circuit) of the terminal device. This is not limited. For ease of description, the following uses an example in which the method is performed by a first terminal device for description.

The method may include: The first terminal device receives a plurality of pieces of data on S resource block sets, where S is an integer greater than 1; the first terminal device performs one time of LBT, where the LBT corresponds to N3 pieces of feedback information in M pieces of feedback information, the M pieces of feedback information correspond to the plurality of pieces of data, resources used to transmit the N3 pieces of feedback information are located in a same time unit, and N3 is an integer greater than 1; and after the LBT succeeds, the first terminal device sends the N3 pieces of feedback information.

Based on the foregoing technical solution, the first terminal device starts the same LBT for the N3 pieces of feedback information, so that transmission performance can be improved. For example, if the duration of the one time of LBT corresponding to the N3 pieces of feedback information is determined by the priority value of the feedback information with the highest priority in the N pieces of feedback information, the first terminal device may preempt a channel by using less time, thereby reducing a transmission delay of the feedback information.

Optionally, resource block sets used to transmit the N3 pieces of feedback information are a same resource block set, or at least two resource block sets used to transmit at least two of the N3 pieces of feedback information do not overlap.

Optionally, data corresponding to the N3 pieces of feedback information is from a same second terminal device.

Based on the foregoing technical solution, if the data corresponding to the N3 pieces of feedback information is from the same second terminal device, the second terminal device may receive the N3 pieces of feedback information at the same time, to determine a result of decoding the data corresponding to the N3 pieces of feedback information by the first terminal device.

Optionally, the data corresponding to the N3 pieces of feedback information is received by the first terminal device before a target moment, and a gap between the target moment and the first time unit is a preset value.

The preset value may be determined by a capability of the first terminal device, and the preset value is greater than or equal to shortest duration from a moment at which the first terminal device receives the data to a moment at which the first terminal device starts to send the feedback information corresponding to the data.

Optionally, the data corresponding to the N3 pieces of feedback information is same data.

According to a fifth aspect, a communication apparatus is provided. The apparatus is configured to perform the method according to any one of the possible implementations of the first aspect to the fourth aspect. Specifically, the apparatus may include a unit and/or a module configured to perform the method in any one of the first aspect and the possible implementations of the first aspect, or may include a unit and/or a module configured to perform the method in any one of the second aspect and the possible implementations of the second aspect, or may include a unit and/or a module configured to perform the method in any one of the third aspect and the possible implementations of the third aspect, or may include a unit and/or a module configured to perform the method in any one of the fourth aspect and the possible implementations of the fourth aspect, for example, a processing unit and/or a communication unit.

In an implementation, the apparatus is a first terminal device. When the apparatus is the first terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first terminal device. When the apparatus is the chip, the chip system, or the circuit used in the first terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a sixth aspect, a communication apparatus is provided. The apparatus includes at least one processor, configured to execute a computer program or instructions stored in a memory, to perform the method in any one of the first aspect and the possible implementations of the first aspect, or perform the method in any one of the second aspect and the possible implementations of the second aspect, or perform the method in any one of the third aspect and the possible implementations of the third aspect, or perform the method in any one of the fourth aspect and the possible implementations of the fourth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a first terminal device.

In another implementation, the apparatus is a chip, a chip system, or a circuit used in the first terminal device.

According to a seventh aspect, this application provides a processor, configured to perform the method provided in the first aspect, or configured to perform the method provided in the second aspect, or configured to perform the method provided in the third aspect, or configured to perform the method provided in the fourth aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable storage medium stores program code executed by a device. The program code is used to perform the method in any one of the first aspect and the possible implementations of the first aspect, or is used to perform the method in any one of the second aspect and the possible implementations of the second aspect, or is used to perform the method in any one of the third aspect and the possible implementations of the third aspect, or is used to perform the method in any one of the fourth aspect and the possible implementations of the fourth aspect.

According to a ninth aspect, a computer program product including instructions is provided. When the computer program product is run on a computer, the computer is enabled to perform the method in any one of the first aspect and the possible implementations of the first aspect, or the computer is enabled to perform the method in any one of the second aspect and the possible implementations of the second aspect, or the computer is enabled to perform the method in any one of the third aspect and the possible implementations of the third aspect, or the computer is enabled to perform the method in any one of the fourth aspect and the possible implementations of the fourth aspect.

According to a tenth aspect, a communication system is provided, including the foregoing first terminal device and second terminal device. The first terminal device is configured to perform the method in any one of the first aspect and the possible implementations of the first aspect, or is configured to perform the method in any one of the second aspect and the possible implementations of the second aspect, or is configured to perform the method in any one of the third aspect and the possible implementations of the third aspect, or is configured to perform the method in any one of the fourth aspect and the possible implementations of the fourth aspect.

## BRIEF DESCRIPTION OF DRAWINGS

FIG. 1 is a diagram of a communication system to which a method according to an embodiment of this application is applicable;
FIG. 2 is a diagram of a periodically configured PSFCH resource;
FIG. 3 is a diagram of a mapping relationship between a PSSCH resource and a PSFCH resource;
FIG. 4 is a diagram of performing LBT by a terminal device to obtain a COT;
FIG. 5 is a schematic flowchart of a sidelink communication method according to an embodiment of this application;
FIG. 6 is a diagram of receiving data and sending feedback information by a terminal device;
FIG. 7 is a diagram of feedback information to be fed back by a terminal device;
FIG. 8 is a schematic flowchart of a sidelink communication method according to another embodiment of this application;
FIG. 9 is a schematic flowchart of a sidelink communication method according to another embodiment of this application;
FIG. 10 is a diagram of phase offsets corresponding to feedback information transmitted on different resource block sets;
FIG. 11 is a schematic flowchart of a sidelink communication method according to another embodiment of this application;
FIG. 12 is a diagram of performing LBT by a terminal device;
FIG. 13 is a diagram of performing LBT by a terminal device;
FIG. 14 is a diagram of performing LBT by a terminal device;
FIG. 15 is a schematic flowchart of a sidelink communication method according to another embodiment of this application;
FIG. 16 is a diagram of performing LBT by a terminal device;
FIG. 17 is a diagram of a communication apparatus according to an embodiment of this application;
FIG. 18 is a block diagram of a communication apparatus according to another embodiment of this application; and
FIG. 19 is a diagram of a chip system according to an embodiment of this application.

## DESCRIPTION OF EMBODIMENTS

The following describes technical solutions of embodiments in this application with reference to accompanying drawings.

The technical solutions provided in this application may be applied to various communication systems, for example, a fifth generation (5th generation, 5G) or new radio (new radio, NR) system, a long-term evolution (long-term evolution, LTE) system, an LTE frequency division duplex (frequency division duplex, FDD) system, an LTE time division duplex (time division duplex, TDD) system, or the like. The technical solutions provided in this application may be further applied to a future communication system, for example, a 6th generation mobile communication system. The technical solutions provided in this application may be further applied to sidelink (sidelink, SL) communication, vehicle-to-everything (vehicle-to-everything, V2X) communication, machine to machine (machine to machine, M2M) communication, machine type communication (machine type communication, MTC), an Internet of Things (Internet of things, IoT) communication system, or another communication system. As an example, V2X may include vehicle-to-vehicle (vehicle-to-vehicle, V2V), vehicle-to-pedestrian (vehicle-to-pedestrian, V2P), and vehicle-to-infrastructure (vehicle-to-infrastructure, V2I). The infrastructure is, for example, a road side unit (road side unit, RSU) or a network device.

A terminal device in embodiments of this application includes various devices having a wireless communication function, and the terminal device may be configured to connect to a person, an object, a machine, and the like. The terminal device may be widely applied to various scenarios, for example, cellular communication, SL, V2X, peer to peer (peer to peer, P2P), M2M, MTC, IoT, virtual reality (virtual reality, VR), augmented reality (augmented reality, AR), industrial control, autonomous driving, telemedicine, smart grid, smart furniture, smart office, smart wearable, smart transportation, smart city, unmanned aerial vehicle, robot, remote sensing, passive sensing, positioning, navigation and tracking, and autonomous delivery. The terminal device may be a terminal in any one of the foregoing scenarios, for example, an MTC terminal or an IoT terminal. The terminal device may be user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, a flight device (for example, an unmanned aerial vehicle, a helicopter, a multicopter, a quadcopter, or an airplane), a ship, a remote control device, a smart home device, or an industrial device, may be an apparatus built in the foregoing device (for example, a communication module, a modem, or a chip in the foregoing device), or may be another processing device connected to the wireless modem.

It should be understood that in some scenarios, the terminal device may be further configured to serve as a base station. For example, the terminal device may serve as a scheduling entity, and provide a sidelink signal between terminal devices in a scenario such as V2X, SL, or P2P.

In embodiments of this application, an apparatus configured to implement a function of the terminal device, namely, a terminal apparatus, may be a terminal device, or may be an apparatus, for example, a chip system or a chip, that can support the terminal device in implementing the function. The apparatus may be mounted in the terminal device. In embodiments of this application, a chip system may include a chip, or may include a chip and another discrete device.

The terminal device may be deployed on land, including indoor or outdoor and handheld or vehicle-mounted devices, may be deployed on a water surface, or may be deployed on an airplane, a balloon, and a satellite in the air. A scenario in which the terminal device is located is not limited in embodiments of this application.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one (piece) of a, b, or c may represent: a, b, c, a-b, a-c, b-c, or a-b-c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms "first", "second", and the like, and do not limit a quantity and an execution order, and the terms "first", "second", and the like are not limited to be necessarily different. In addition, in embodiments of this application, terms such as "example" or "for example" are used to represent giving an example, an illustration, or a description. Any embodiment or design solution described as "example" or "for example" in embodiments of this application should not be construed as being more preferred or advantageous than other embodiments or design solutions. Exactly, use of the terms such as "example" or "for example" is intended to present a related concept in a specific manner for ease of understanding.

It should be further noted that, in embodiments of this application, for ease of description, when numbering is involved, consecutive numbering may start from 1. For example, S resource block sets may include a first resource block set to a $S^{th}$ resource block set, and N pieces of feedback information may include a first piece of feedback information to an $n^{th}$ piece of feedback information. Certainly, specific implementation is not limited thereto. For example, numbers may alternatively be consecutive and start from 0. For example, S resource block sets may include a 0th resource block set to an (S-1)th resource block set, and N pieces of feedback information may include a 0th piece of feedback information to an (N-1)th piece of feedback information, and the like. For brevity, examples are not enumerated herein.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

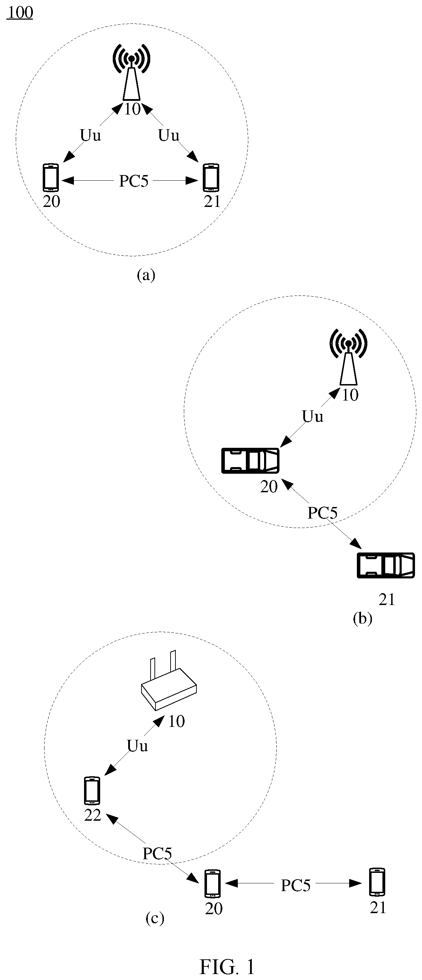

FIG. 1 is a diagram of a communication system 100 to which an embodiment of this application is applicable.

A communication system 100 shown in (a) in FIG. 1 includes a network device 10, a terminal device 20, and a terminal device 21. Both the terminal device 20 and the terminal device 21 are within a coverage area of the network device 10. The network device 10 communicates with the terminal devices through a Uu air interface, and the terminal device 20 communicates with the terminal device 21 through a PC5 interface. A communication system 100 shown in (b) in FIG. 1 includes a network device 10, a terminal device 20, and a terminal device 21. The terminal device 20 is within a coverage area of the network device 10, and the terminal device 21 is outside the coverage area of the network device 10. A communication system 100 shown in (c) in FIG. 1 includes a network device 10, a terminal device 20, a terminal device 21, and a terminal device 22. Neither the terminal device 20 nor the terminal device 21 is within a coverage area of the network device 10, and the terminal device 22 is within the coverage area of the network device 10.

In scenarios shown in (a) and (b) in FIG. 1, the terminal device 20 may communicate with the terminal device 21 by using a resource scheduled by the network device, and the resource may be referred to as a licensed resource or a licensed frequency band; or the terminal device 20 may select a resource by itself, to be specific, selects a resource from a resource pool, to communicate with the terminal device 21, and the resource may be referred to as an unlicensed resource or an unlicensed frequency band. In a scenario shown in (c) in FIG. 1, because both the terminal device 20 and the terminal device 21 are in an area without network coverage, the terminal device 20 and the terminal device 21 may communicate in a self-resource selection manner.

It should be understood that quantities of terminal devices and network devices shown in FIG. 1 are merely examples, and quantities of terminal devices and network devices in the communication system are not limited in this application.

To understand this application more clearly, the following describes concepts used in unlicensed spectrum communication.

1. Licensed spectrum and unlicensed spectrum

Spectra used in a wireless communication system are classified into two types: a licensed spectrum (licensed spectrum) and an unlicensed spectrum (unlicensed spectrum). In the licensed spectrum, a UE may use a spectrum resource based on scheduling performed by a network device. The following mainly describes the unlicensed spectrum.

In the unlicensed spectrum, a sending device may use a spectrum resource through contention. In a possible manner, the sending device contends for a channel through listen-before-talk (listen-before-talk, LBT), to use a channel resource.

2. Resource pool

NR SL communication is performed based on the resource pool (resource pool). The resource pool is a block of time-frequency resources used for SL communication. Frequency domain resources included in the resource pool are consecutive. Time domain resources included in the resource pool may be consecutive or inconsecutive. Different resource pools are distinguished by SL resource pool identifiers (for example, SL-ResourcePoolID). If different resource pools have a same resource pool index, it may be considered that time-frequency resources in the different resource pools completely overlap.

In an SL-unlicensed spectrum (SL-unlicensed, SL-U) communication scenario, because a frequency band is shared by UEs in a plurality of forms, for example, a UE using an SL technology (referred to as an SL UE), a UE using a Wi-Fi technology, and a UE using a Bluetooth technology perform transmission on a same frequency band. Therefore, an SL resource pool may also be understood as a set of resources that can be used for SL transmission.

3. Resource:

The resource is a time-frequency resource in a resource pool. A time domain resource may be represented by a symbol (symbol), a slot (slot), a mini-slot (mini-slot), a partial slot (partial slot), a subframe (subframe), a radio frame (frame), a sensing slot (sensing slot), or the like.

A frequency domain resource may be represented by a resource element (resource element, RE), a resource block (resource block, RB), a subchannel (subchannel), a bandwidth (bandwidth), a bandwidth part (bandwidth part, BWP), a carrier (carrier), a channel (channel), an interlace (interlace), or the like.

4. Relationship between a resource pool and a channel:

The resource pool includes at least one LBT channel. For example, the resource pool includes one LBT channel, a channel bandwidth is 20 MHz, and a resource pool bandwidth is 20 MHz. For another example, the resource pool includes two LBT channels, a channel bandwidth is 20 MHz, and a resource pool bandwidth is 40 MHz. For another example, the resource pool includes five LBT channels, a channel bandwidth is 20 MHz, and a resource pool bandwidth is 100 MHz.

5. LBT:

An LBT mechanism is a channel access rule based on random back-off (random back-off). To be specific, before accessing a channel and starting to send data, a terminal needs to sense whether the channel is idle (idle). If the terminal senses that the channel is idle for a specific time, the terminal may occupy the channel. If the terminal senses that the channel is not idle, the terminal needs to wait and can occupy the channel only after the channel is restored to idle again. The LBT mechanism is a mandatory feature for using an unlicensed frequency band because there are regulation (regulation) requirements for using the unlicensed frequency band in various regions around the world. Terminals in various forms operating in different communication protocols can use the unlicensed frequency band only when regulations are met, to fairly and efficiently use spectrum resources.

For an unlicensed spectrum of FR1, before transmission, a UE needs to perform LBT on each 20 MHz channel, and the 20 MHz channel may be referred to as an LBT channel. To avoid interference between different channels, the UE cannot send data on the entire 20 MHz bandwidth, but reserves a part of frequency band resources as a guard band (guard band), and sends the data only on a remaining part of frequency domain resources. This part of available resources is referred to as a resource block set (RB set). When the UE performs LBT operations on a plurality of consecutive 20 MHz channels and successfully accesses the channel, a guard band between two RB sets may be used to transmit data, thereby improving resource utilization.

To comply with regulations, the 3GPP organization classifies LBT mechanisms in an NR system into the following four types:

Category 1 LBT (category 1 LBT): After obtaining a channel occupancy time (channel occupancy time, COT), a communication device sends data immediately after a short switching gap (switching gap) from a receiving state. This is referred to as Cat 1 LBT. The COT refers to a time in which the communication device is allowed to occupy a channel after successfully accessing the channel, where a time of the switching gap cannot be greater than 16 μs.

Category 2 LBT (category 2 LBT): LBT without random back-off is referred to as Cat 2 LBT. To be specific, after sensing that a channel is in an idle state and lasts for a fixed time, a communication device can send data without performing random back-off.

Category 3 LBT (category 3 LBT): Random back-off LBT with a fixed-size contention window (contention window) is referred to as Cat 3 LBT. To be specific, a communication device generates a random number N based on a fixed-size contention window, and may send data after sensing that a channel is in an idle state and lasts for a time determined based on the random number N. A size of the contention window is related to a minimum value and a maximum value of N.

Category 4 LBT (category 4 LBT): Random back-off LBT with a variable-size contention window is referred to as Cat 4 LBT. To be specific, a communication device generates a random number N based on a variable-size contention window, and may send data after sensing that a channel is in an idle state and lasts for a time determined based on the random number N. A size of the contention window is related to a minimum value and a maximum value of N, and the communication device may change the size of the contention window.

An SL-U device complies with the 3GPP protocol, and uses the LBT mechanism as a channel access method. Specifically, the SL-U device uses the following types of LBT.

Type 1 LBT: The foregoing Cat 4 LBT. The SL-U device can access a channel and send data only after performing random back-off. Specifically, a network device or a terminal device may initiate transmission after the network device or the terminal device senses for the first time that the channel is idle in sensing slot duration (sensing slot duration) of defer sensing (defer sensing) (the time is denoted as $T_d$) and after a counter N in the following step 4 is zero. Specifically, according to the following steps, the counter N is adjusted by sensing the channel to obtain additional sensing slot duration.

Step 1: Set N=$N_{init}$ and perform step 4. $N_{init}$ is a random number ranging from 0 to $CW_p$, and $CW_p$ is a contention window (contention window).

Step 2: If N>0, the network device or the terminal device chooses to decrease a value of the counter, for example, sets N=N-1.

Step 3: Sense the channel to obtain additional sensing slot duration, and if the channel is idle in the additional sensing slot duration, perform step 4; otherwise, perform step 5.

Step 4: If N=0, stop; otherwise, perform step 2.

Step 5: Sense the channel, until it is sensed, in another $T_d$, that the channel is busy, or it is sensed that the channel is detected as being idle in all sensing slots in another $T_d$.

Step 6: If the channel is detected as being idle in all the sensing slots in the another $T_d$, perform step 4; otherwise, perform step 5.

$T_d$ includes $T_f$=16 μs and subsequent $m_p$ pieces of consecutive sensing slot duration (denoted as $T_{s1}$). For a value of $m_p$, see Table 1. $CW_{min,p}$ is a contention window minimum value, $CW_{max,p}$ is a contention window maximum value, and $CW_{min,p} \leq CW_p \leq CW_{max,p}$. $T_{mcot,p}$ is a maximum length of a COT, that is, a COT during which the network device or the terminal device performs transmission on the channel does not exceed $T_{mcot,p}$.

Table 1

| Channel access priority class (p) | $m_p$ | $CW_{min,p}$ | $CW_{max,p}$ | $T_{mcot,p}$ | Value of $CW_p$ |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 ms or 10 ms | {15, 31, 63} |
| 4 | 7 | 15 | 1023 | 8 ms or 10 ms | {15, 31, 63, 127, 255, 511, 1023} |

Type 2A LBT: Cat 2 LBT with a gap of 25 μs. After sensing that the channel is idle for 25 μs, the SL-U device may access the channel and send data.

Type 2B LBT: Cat 2 LBT with a gap of 16 μs. After sensing that the channel is idle for 16 μs, the SL-U device may access the channel and send data.

Type 2C LBT: Cat 1 LBT with a maximum gap of 16 μs. The SL-U device does not need to sense the channel, and may directly access the channel and send data after a maximum switching gap of 16 μs in the COT.

6. Priority:

A service priority of a UE refers to a proximity service per-packet priority (ProSe per-packet priority, PPPP) of the UE. Because the UE may simultaneously send a plurality of services, priorities of the plurality of services may be different.

There is a correspondence between a priority class and a priority value. In SL communication, a higher priority class corresponds to a lower priority value, or it may be understood as that a lower priority value represents a higher priority class. In this application, an example in which a higher priority class corresponds to a lower priority value is used for description. For example, a value range of the priority value is 0 to 7, or is 1 to 8.

7. Channel occupancy (channel occupancy, CO) and channel occupancy time (channel occupancy time, COT):

A channel is a group of consecutive resource blocks (RB) on which a channel access process is performed on an unlicensed spectrum. It may be understood as that the channel is a bandwidth used by a UE to perform channel access.

Channel occupancy refers to transmission performed by the UE on one or more channels after the UE performs the channel access process.

After performing type 1 channel access, the UE occupies a channel in a continuous period of time to transmit information, and this continuous period of time is referred to as the channel occupancy time. A frequency-domain unit of the COT is a channel, and a time-domain unit of the COT is ms or a slot. In this application, the COT may be a time concept, that is, a time for SL transmission, or may be a resource concept, that is, a time-frequency resource occupied by SL transmission.

It should be understood that the UE may transmit information on a plurality of adjacent or non-adjacent channels. In this application, that the UE transmits information on a plurality of channels may be understood as follows: The UE occupies one COT to transmit information, and the COT occupies a plurality of channels in frequency domain; or the UE occupies a plurality of COTs to transmit information, and each COT occupies one channel in frequency domain.

The COT may be shared (COT sharing) for information transmission between UEs. A UE with an initial COT may share the COT with another UE, that is, use the COT for SL transmission with the another UE, for example, transmission of feedback information. The UE with the initial COT and the UE sharing the COT occupy a channel in a continuous period of time to perform transmission. COT sharing needs to meet a corresponding condition. For example, the UE with the initial COT is a receiving UE or a sending UE of the UE sharing the COT. For another example, the UE with the initial COT and the UE sharing the COT are members in a same group. In addition, to prevent another UE from preempting the channel, when the UE with the initial COT shares the COT with another UE, after the UE with the initial COT completes transmission, the UE sharing the COT is required to access the channel within 25 $\mu$s or 16 $\mu$s.

A time for the UE to transmit information cannot exceed a limit of a maximum channel occupancy time (maximum channel occupancy time, MCOT), which is denoted as $T_{cot,p}$. For different channel access priority classes (channel access priority class, CAPC), values of $T_{cot,p}$ are different, as shown in Table 1. For a case in which one UE accesses a channel and transmits information in a COT, a transmission time does not exceed the maximum channel occupancy time $T_{cot,p}$. For a case in which a plurality of UEs transmit information in a COT, a transmission time of a UE with an initial COT and a UE sharing the COT does not exceed the maximum channel occupancy time $T_{cot,p}$, where p is a CAPC of the UE with the initial COT, or p is a CAPC with a minimum CAPC value in UEs that perform transmission in the COT.

8. Physical sidelink feedback channel (physical sidelink feedback channel, PSFCH) resource:

The PSFCH resource represents a resource used to transmit information carried on a PSFCH. For example, one PSFCH resource occupies two consecutive orthogonal frequency division multiplexing (orthogonal frequency division multiplexing, OFDM) symbols in time domain, and is one physical resource block (physical resource block, PRB) in frequency domain.

In a possible case, the PSFCH resource may be used to transmit feedback information. For example, for one time of PSSCH transmission, if a transmit end adds hybrid automatic repeat request acknowledgment (hybrid automatic repeat request acknowledgment, HARQ-ACK) feedback enabling information to control information, a receive end may feed back acknowledgment (acknowledgment, ACK) or negative acknowledgment (negative acknowledgment, NACK) information based on a decoding result of data information carried on a PSSCH. The ACK or NACK information is transmitted through the PSFCH. The PSSCH transmission refers to transmission performed through the PSSCH.

(1) Configuration period of the PSFCH resource.

The PSFCH resource may be a periodic resource configured in a resource pool. For example, it is assumed that a period parameter is N. In an example, a value of N may be 1, 2, or 4. For PSSCH transmission in a slot n, a corresponding PSFCH resource appears in a slot n+a, where a is a smallest integer greater than or equal to K, and K depends on a capability of a UE. In other words, the slot n+a is the first slot in which a PSFCH resource exists after a slot n+K-1. Currently, a value of K is not determined. Assuming that K of all UEs is a same value, when the PSFCH resource appears at a period N, N times of PSSCH transmission correspond to a same PSFCH resource.

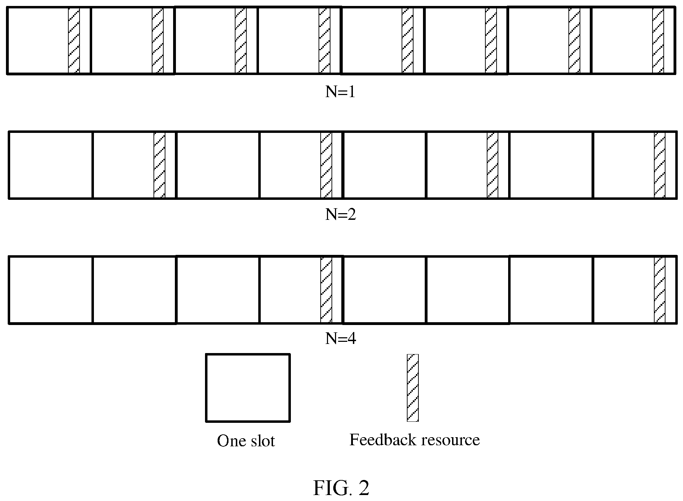

FIG. 2 is a diagram of the PSFCH resource; FIG. 2 shows a PSFCH configuration situation in a resource pool by using an example in which the period parameter is 1, 2, and 4 separately. In the resource pool, one slot in every one slot, every two slots, and every four slots includes a PSFCH resource.

(2) Timing of a HARQ feedback, namely, determining of a time domain resource for the PSFCH resource.

For NR-V2X, timing of the HARQ feedback is a time interval between the PSSCH and the PSFCH. It is assumed that an end position of PSSCH transmission is in a slot n, and a corresponding slot for HARQ feedback is the first slot in which a PSFCH resource exists after a slot n+K-1. The PSFCH resource may also be referred to as a PSFCH transmission opportunity.

(3) Determining of a frequency domain resource for the PSFCH resource.

A PSFCH available resource in a slot in which a PSFCH resource exists is sequentially allocated to each sub-channel in a feedback period in a manner of time domain first and then frequency domain.

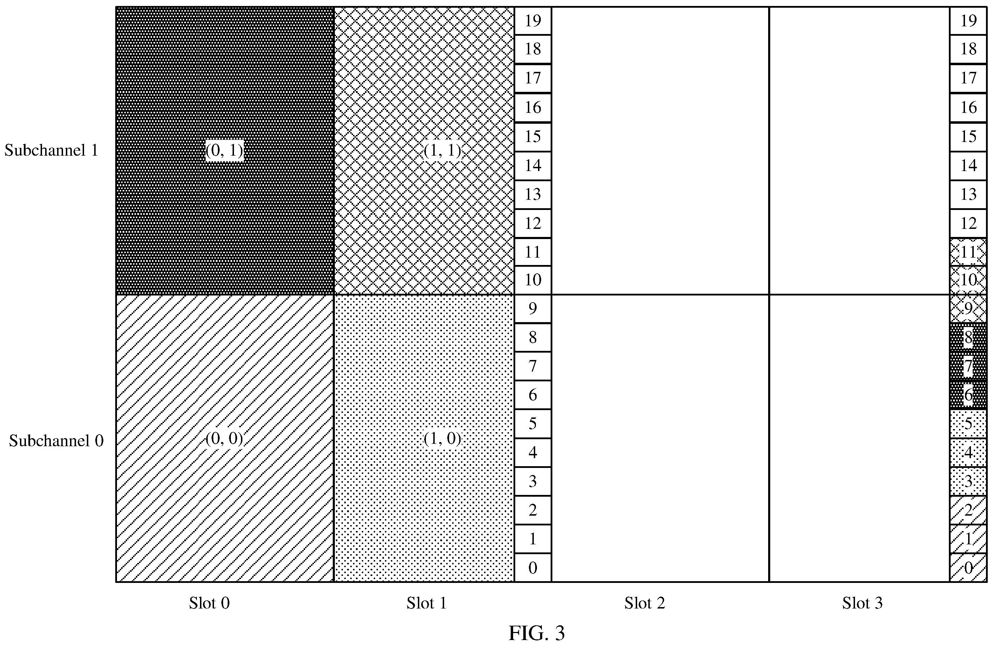

FIG. 3 shows an example of a mapping relationship between a PSSCH resource and a PSFCH resource. It is assumed that, as shown in FIG. 3, a period parameter configured for a PSFCH resource is 2 (that is, one slot in every two slots includes a PSFCH resource), feedback timing K=2, a quantity of PSSCH slots corresponding to a slot 3 including a PSFCH resource is 2, a quantity of sub-channels is 2, each sub-channel includes 10 PRBs, a quantity of PRBs that can be used to transmit HARQ information is 20, and a quantity of PRBs configured to transmit HARQ information is 12. In this way, each sub-channel may correspond to three physical resource blocks (physical resource block, PRB). For example, a sub-channel (0, 0) corresponds to a sub-channel index 0 and a slot index 0, and the sub-channel corresponds to feedback resources whose PRB indexes are 0, 1, and 2.

9. Service scenario supporting PSFCH feedback:

V2X is used as an example. V2X supports three scenarios: unicast, multicast, and broadcast. HARQ feedback is supported for unicast and multicast. There are two multicast scenarios: multicast 1 and multicast 2.

In a unicast scenario, one sending terminal and one receiving terminal form one unicast connection pair. After correctly receiving control information from the sending terminal, the receiving terminal sends, based on HARQ enabling indication information of the control information, a PSFCH sequence that carries ACK information to the sending terminal if data information received through a PSSCH is correctly decoded. Otherwise, the receiving terminal feeds back a PSFCH sequence that carries NACK information. The receiving terminal receives the control information from the sending terminal through a physical sidelink control channel (physical sidelink control channel, PSCCH). The receiving terminal sends the PSFCH sequence to the sending terminal through a PSFCH.

In a scenario of multicast 1 (negative acknowledgment-only (negative acknowledgment-only, NACK-only)), after correctly receiving control information from a sending terminal, an intra-group terminal feeds back, based on HARQ enabling indication information of the control information, a PSFCH sequence that carries NACK information if the intra-group terminal fails to decode the received data information. Otherwise, the intra-group terminal does not feed back any information.

In a scenario of multicast 2 (NACK/ACK), after correctly receiving control information from a sending terminal, an intra-group terminal feeds back, based on HARQ enabling indication information of the control information, a PSFCH sequence that carries ACK information if the intra-group terminal correctly decodes the received data information. Otherwise, the intra-group terminal feeds back a PSFCH sequence that carries NACK information.

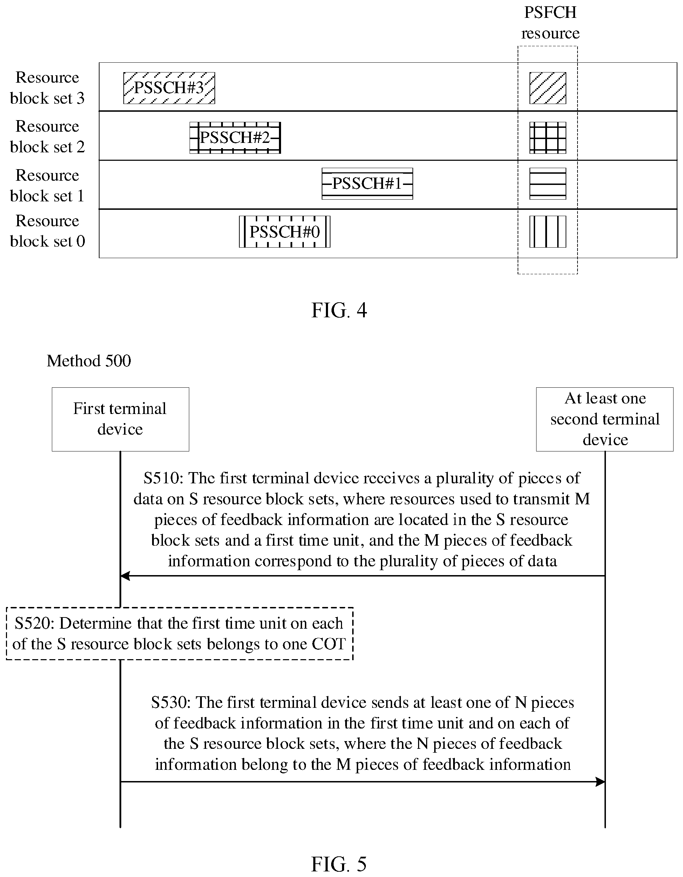

FIG. 4 is a diagram of receiving data by a terminal device on a plurality of RB sets.

As shown in FIG. 4, the terminal device receives data#0 on an RB set 0 through PSSCH#0, receives data#1 on an RB set 1 through PSSCH#1, receives data#2 on an RB set 2 through PSSCH#2, and receives data#3 on an RB set 3 through PSSCH#3. PSFCH resources used by the terminal device to provide feedback for data#0 to data#3 have a same time domain. In other words, if the terminal device needs to provide feedback for data#0 to data#3, the terminal device needs to send four pieces of feedback information at the same time, and the four pieces of feedback information are in a one-to-one correspondence with data#0 to data#3.

However, a capability of the terminal device may not support the terminal device in simultaneously sending the four pieces of feedback information. In this case, the terminal device sends some of the four pieces of feedback information. Assuming that the terminal device sends feedback information of data#3 and data#2, but does not send feedback information of data#0 and data#1, PSFCH resources used to provide feedback for data#0 and data#1 may be wasted. In addition, if the PSFCH resource used to provide feedback for data#0 belongs to COT#1, when the terminal device does not send the feedback information of data#0, because the PSFCH resource used to provide feedback for data#0 is idle, another terminal device may successfully preempt the channel, and consequently COT#1 is interrupted. Similarly, if the PSFCH resource used to provide feedback for data#1 belongs to COT#2, when the terminal device does not send the feedback information of data#1, COT#2 may be interrupted. COT#1 and COT#2 are a same COT, or are different COTs. This is not limited in this application.

In view of this, this application provides a sidelink communication method, to reduce a COT interruption problem that is caused when a terminal device performs communication based on a sidelink.

It should be noted that, in the following embodiments, descriptions of "a resource used to transmit feedback information" and "a resource for feedback information" may be replaced with each other.

It should be further noted that in the following embodiments, "feedback information" may be replaced with "PSFCH". For example, "sending feedback information" may be replaced with "sending a PSFCH". In the following embodiments, "data" may be replaced with "PSFCH", and "receive data" may be replaced with "receive a PSSCH". In the following embodiments, "control information" may be replaced with "PSCCH". For example, "control information corresponding to data" may be replaced with "PSCCH corresponding to a PSSCH".

FIG. 5 is a schematic flowchart of a sidelink communication method 500 according to an embodiment of this application. The method 500 may include the following steps.

S510: A first terminal device receives a plurality of pieces of data on S resource block sets.

Resources used to transmit M pieces of feedback information are located in the S resource block sets and a first time unit, the M pieces of feedback information correspond to the plurality of pieces of data, and both S and M are integers greater than 1. For ease of description, a quantity of the plurality of pieces of data is denoted as P, where P is an integer greater than 1.

A time unit is a symbol, a slot, or the like. This is not limited in embodiments of this application.

The P pieces of data received by the first terminal device are sent by at least one second terminal device to the first terminal device. Any one of the at least one second terminal device may communicate with the first terminal device in unicast mode, or may communicate with the first terminal device in multicast mode. This is not limited in this application. The at least one second terminal device may be one second terminal device, or may be a plurality of second terminal devices. One second terminal device may send one piece of data to the first terminal device, or may send two or more pieces of data to the first terminal device.

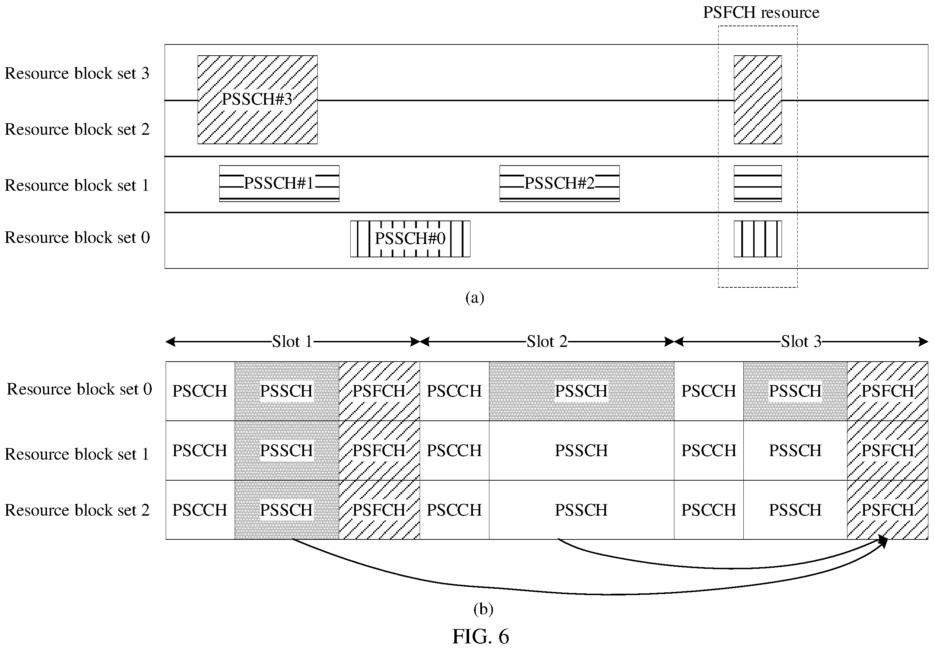

It should be noted that, that the first terminal device receives the P pieces of data on the S resource block sets means that the first terminal device receives at least one of the P pieces of data on each of the S resource block sets. The first terminal device may receive one piece of data on a plurality of resource block sets, or may receive a plurality of pieces of data on one resource block set, or may receive one piece of data on one resource block set. As shown in (a) in FIG. 6, the first terminal device receives one piece of data respectively on a resource block set 1 through PSSCH#1 and PSSCH#2, and receives one piece of data on a resource block set 2 and a resource block set 3 through PSSCH#3. It can be learned that P may be greater than S, or equal to S, or less than S.

It should be further noted that the first terminal device may receive the P pieces of data in a same time unit on the S resource block sets, or receive the P pieces of data in different time units on the S resource block sets. This is not limited in this application.

It should be further noted that the first terminal device may further receive, on at least one of the S resource block sets, one or more pieces of data different from the P pieces of data, where a resource for feedback information corresponding to the one or more pieces of data different from the P pieces of data is located in a second time unit, and the second time unit is different from the first time unit. In other words, the first terminal device receives P' pieces of data on the S resource block sets, resources for feedback information corresponding to the P pieces of data in the P' pieces of data are located in the S resource block sets and the first time unit, and a resource for feedback information corresponding to data other than the P pieces of data in the P' pieces of data is located in the second time unit and at least one of the S resource block sets. P' is an integer greater than P.

As shown in (b) in FIG. 6, a PSFCH resource exists in a slot 1 and a slot 3, that is, a configuration period of the PSFCH resource is 2. If K=1, a PSFCH resource corresponding to a PSSCH resource in a slot n is located in the first slot in which a PSFCH resource exists after the slot n, that is, PSFCH resources corresponding to PSSCH resources in the slot 1 and a slot 2 are all located in the slot 3. If the first terminal device receives three pieces of data (denoted as data#1 to data#3) in the slot 1 and on a resource block set 0 to a resource block set 2, receives one piece of data (denoted as data#4) in the slot 2 and on the resource block set 0, and receives one piece of data (denoted as data#5) in the slot 3 and on the resource block set 0, because resources for feedback information corresponding to data#1 to data#4 are located in a same slot, the P pieces of data include data#1 to data#4.

It should be further noted that the P pieces of data in this embodiment of this application are data for which the first terminal device needs to feed back a decoding result. In other words, the first terminal device may receive P" pieces of data on the S resource sets, and the first terminal device needs to feed back a decoding result of the P pieces of data in the P" pieces of data, but does not need to provide feedback for data other than the P pieces of data in the P" pieces of data. For example, one of the P" pieces of data is multicast data. If the first terminal device successfully decodes the multicast data, the first terminal device may not feed back a decoding result of the multicast data. P" is an integer greater than P.

When the M pieces of feedback information correspond to the P pieces of data, each of the M pieces of feedback information is used to indicate a decoding result of data corresponding to the feedback information. For example, the feedback information is ACK information or NACK information. The M pieces of feedback information may also be referred to as feedback information to be fed back by the first terminal device. For example, M may also be represented as $N_{sch,TX,PSFCH}$.

A correspondence between the M pieces of feedback information and the P pieces of data is not limited in this embodiment of this application.

For example, the M pieces of feedback information are in a one-to-one correspondence with the P pieces of data, that is, M=P.

For example, the M pieces of feedback information include at least one piece of feedback information, and each of the at least one piece of feedback information corresponds to a plurality of pieces of data in the P pieces of data, that is, M<P. For example, if the P pieces of data include a plurality of pieces of same data, the first terminal device may generate one piece of feedback information for the plurality of pieces of data.

That the resources used to transmit the M pieces of feedback information are located in the S resource block sets and the first time unit means that the first time unit is used to transmit the M pieces of feedback information, and each of the S resource block sets is used to transmit at least one of the M pieces of feedback information.

Feedback information transmitted on different resource block sets in the S resource block sets may be the same or may be different. As shown in (a) in FIG. 6, the first terminal device receives one piece of data (denoted as data#a) on the resource block set 1 through PSSCH#1, and the resource block set 1 is used to transmit feedback information corresponding to data#a; the first terminal device receives one piece of data (denoted as data#b) on the resource block set 0 through PSSCH#0, and the resource block set 0 is used to transmit feedback information corresponding to data#b; and the first terminal device receives one piece of data (denoted as data#c) on the resource block set 2 and the resource block set 3 through PSSCH#3, and the resource block set 2 and the resource block set 3 are used to transmit feedback information corresponding to data#c. It can be learned that the resource block set 2 and the resource block set 3 are used to transmit same feedback information, and the resource block set 2, the resource block set 1, and the resource block set 0 are respectively used to transmit different feedback information.

It should be noted that the resources used to transmit the M pieces of feedback information may be dynamically configured by a resource pool, or may be determined based on a mapping relationship between a resource used to transmit data and a resource used to transmit feedback information. This is not limited in embodiments of this application.

Optionally, the first terminal device may further receive R pieces of data on T resource block sets different from the S resource block sets, and R' pieces of feedback information corresponding to the R pieces of data are located in the first time unit and on the T resource block sets. T, R, and R' are all positive integers.

Optionally, the method 500 further includes S520.

S520: The first terminal device determines that the first time unit on each of the S resource block sets belongs to one COT.

For example, a slot in which the first time unit is located is denoted as a slot n. If the first terminal device detects PSCCH transmission on a resource block set and in the slot n, the first terminal device determines that the first time unit on the resource block set belongs to one COT.

For example, a slot in which the first time unit is located is denoted as a slot n. If the first terminal device detects PSCCH transmission in a slot before the slot n and on a resource block set, and determines, based on information in the transmission, that a resource occupied by the transmission includes the slot n, the first terminal device determines that the first time unit in the resource block set belongs to one COT. Optionally, the information in the transmission includes transmission duration or information related to transmission duration. For example, the information in the transmission includes a transmission end moment.

In a possible implementation, if the first terminal device receives Y' pieces of data on Y resource block sets, resources used to transmit Y" pieces of feedback information are located in the first time unit and the Y resource block sets, and the Y" pieces of feedback information correspond to the Y' pieces of data, the first terminal device determines whether the first time unit on each of the Y resource block sets belongs to one COT. Y, Y', and Y" are all integers greater than 1. Further, if the first time unit on a resource block set in the Y resource block sets belongs to one COT, the first terminal device adds the resource block set into the S resource block sets. After sequentially determining whether the first time unit on each of the Y resource block sets belongs to one COT, the first terminal device may determine S' resource block sets, where the first time unit on each of the S' resource block sets belongs to one COT. In this implementation, S' may be less than Y, or S' may be equal to Y.

In a possible implementation, if the first terminal device receives Y' pieces of data on Y resource block sets, resources used to transmit Y" pieces of feedback information are located in the first time unit and the Y resource block sets, and Y1 is greater than $N_{max}$, the first terminal device determines whether the first time unit on each of the Y resource block sets belongs to one COT, to determine S' resource block sets. $N_{max}$ represents a maximum quantity of feedback information capable of being simultaneously sent by the first terminal device. Y1 is a quantity of feedback information selected by the first terminal device from the Y" pieces of feedback information. For a manner in which the first terminal device selects the Y1 pieces of feedback information from the Y" pieces of feedback information, refer to a manner in which the first terminal device determines N1 pieces of feedback information from the M pieces of feedback information in S530 below. In this implementation, S' may be less than Y, or S' may be equal to Y.

It should be noted that first time units on different resource block sets in the S' resource block sets belong to a same COT or different COTs. This is not limited in embodiments of this application.

It should be further noted that, if the first terminal device determines the S' resource block sets, and S1 is greater than $N_{max}$, the first terminal device randomly selects the S resource block sets from the S' resource block sets, or the first terminal device selects the S resource block sets from the S' resource block sets in descending order of priorities of feedback information transmitted by the resource block sets, so that $N1 \leq N_{max}$. The plurality of pieces of data received by the first terminal device on the S resource block sets correspond to the M pieces of feedback information, and N1 is a quantity of feedback information selected by the first terminal device from the M pieces of feedback information. For a manner in which the first terminal device selects N1 pieces of feedback information from the M pieces of feedback information, refer to the following description in S530.

If the first terminal device determines the S' resource block sets, and $S1 \leq N_{max}$, the first terminal device determines the S' resource block sets as the S resource block sets. A plurality of pieces of data received by the first terminal device on the S' resource block sets correspond to S" pieces of feedback information. S1 is a quantity of feedback information selected by the first terminal device from the S" pieces of feedback information. For a manner in which the first terminal device selects the S1 pieces of feedback information from the S" pieces of feedback information, refer to a manner in which the first terminal device determines the N1 pieces of feedback information from the M pieces of feedback information in S530 below.

S530: The first terminal device sends at least one of N pieces of feedback information in the first time unit and on each of the S resource block sets.

The N pieces of feedback information belong to the M pieces of feedback information, and N is a positive integer less than or equal to M.

It may be understood that the first terminal device sends the N pieces of feedback information to all or some of the at least one second terminal device in the first time unit and on the S resource block sets. For example, N may also be represented as $N_{TX,PSFCH}$.

The N pieces of feedback information include N1 pieces of feedback information, the N1 pieces of feedback information include feedback information with a highest priority transmitted on a $s^{th}$ resource block set in the S resource block sets, feedback information transmitted on the $s^{th}$ resource block set belongs to the M pieces of feedback information, N1 is a positive integer, and s=1, 2, ..., S, where s=1, 2, ..., S represents that a value of s is each value in 1, 2, ..., S.

A priority of feedback information is a priority of data corresponding to the feedback information. In other words, a priority value of the feedback information is the same as a priority value of the data corresponding to the feedback information. Alternatively, the priority of the feedback information refers to a channel access priority class (channel access priority class, CAPC).

It should be noted that if the feedback information with a highest priority transmitted on the $s^{th}$ resource block set includes a plurality of pieces of feedback information, the N1 pieces of feedback information include one of the plurality of pieces of feedback information with a highest priority transmitted on the $s^{th}$ resource block set.

It should be further noted that, if the feedback information transmitted on the $s^{th}$ resource block set includes both feedback information that belongs to the M pieces of feedback information and feedback information that does not belong to the M pieces of feedback information, the N1 pieces of feedback information include feedback information with a highest priority in the feedback information that belongs to the M pieces of feedback information and that is transmitted on the $s^{th}$ resource block set, and cannot include feedback information that does not belong to the M pieces of feedback information.

As described above, feedback information transmitted on different resource block sets in the S resource block sets may be the same or may be different. Therefore, N1 may be equal to S or less than S. For example, if feedback information transmitted on any two of the S resource block sets is different, feedback information with a highest priority transmitted on each resource block set is different. In this case, N1 is equal to S. For another example, if feedback information transmitted on at least two of the S resource block sets is the same, feedback information with a highest priority transmitted on the at least two resource block sets is the same. In this case, N1 is less than S.

The following describes in detail a manner in which the first terminal device determines the N1 pieces of feedback information.

Manner 1:

The first terminal device determines, based on the M pieces of feedback information, S feedback information sets corresponding to the S resource block sets, where a $s^{th}$ feedback information set in the S feedback information sets includes at least one of the M pieces of feedback information, and the $s^{th}$ resource block set is used to transmit feedback information included in a feedback information set corresponding to the $s^{th}$ resource block set; and the first terminal device determines the N1 pieces of feedback information based on feedback information with a highest priority included in each of the S feedback information sets.

In other words, the first terminal device groups the M pieces of feedback information based on resource block sets used to transmit feedback information, so that the first terminal device selects feedback information with a highest priority in each group, to obtain the N1 pieces of feedback information.

It should be noted that if the feedback information set includes a plurality of pieces of feedback information with a highest priority, the first terminal device may select one piece of feedback information from the plurality of pieces of feedback information with the highest priority, and add the selected piece of feedback information into the N1 pieces of feedback information.

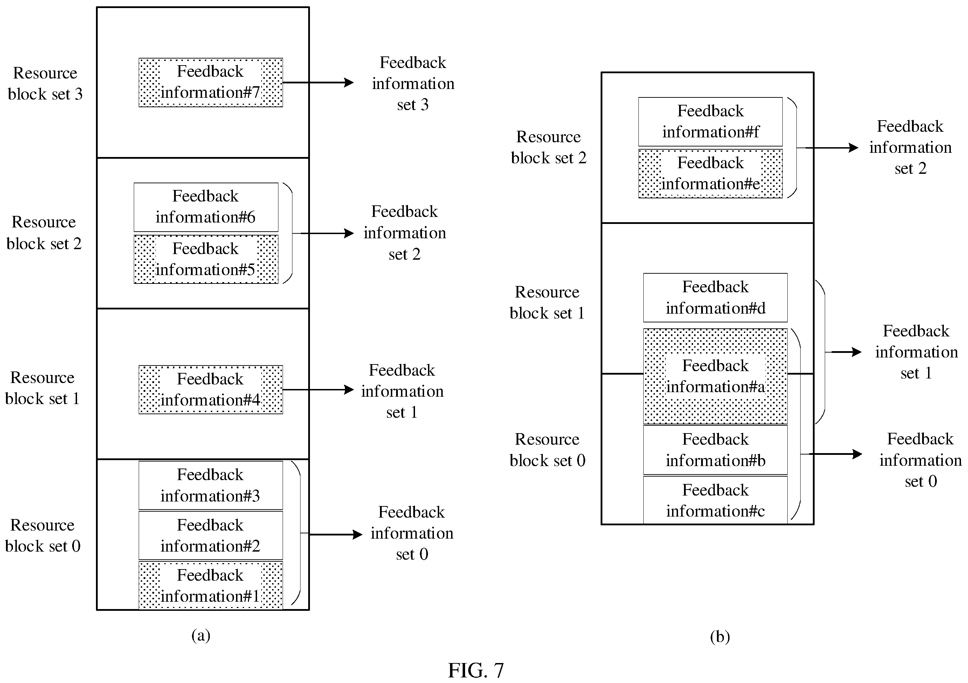

For example, as shown in (a) in FIG. 7, it is assumed that the first terminal device has seven pieces of to-be-fed-back feedback information (that is, M=7), which are respectively feedback information#1 to feedback information#7, and priority values corresponding to feedback information#1 to feedback information#7 are 1 to 7. A resource block set 0 is used to transmit feedback information#1 to feedback information#3, a resource block set 1 is used to transmit feedback information#4, a resource block set 2 is used to transmit feedback information#5 and feedback information#6, and a resource block set 3 is used to transmit feedback information#7. In this case, the first terminal device may determine four feedback information sets. A feedback information set 0 corresponds to the resource block set 0, and the feedback information set 0 includes feedback information#1 to feedback information#3. A feedback information set 1 corresponds to the resource block set 1, and the feedback information set 1 includes feedback information#4. A feedback information set 2 corresponds to the resource block set 2, and the feedback information set 2 includes feedback information#5 and feedback information#6. A feedback information set 3 corresponds to the resource block set 3, and the feedback information set 3 includes feedback information#7.

Further, the first terminal device selects feedback information#1 with a highest priority from the feedback information set 0, selects feedback information#4 with a highest priority from the feedback information set 1, selects feedback information#5 with a highest priority from the feedback information set 2, and selects feedback information#7 with a highest priority from the feedback information set 3, to determine that the N1 pieces of feedback information include feedback information#1, feedback information#4, feedback information#5, and feedback information#7.

For another example, as shown in (b) in FIG. 7, it is assumed that the first terminal device has six pieces of to-be-fed-back feedback information (that is, M=6), which are respectively feedback information#a to feedback information#f, and priority values corresponding to feedback information#a to feedback information#f are 1 to 6. A resource block set 0 is used to transmit feedback information#a to feedback information#c, a resource block set 1 is used to transmit feedback information#a and feedback information#d, and a resource block set 2 is used to transmit feedback information#e and feedback information#f. In this case, the first terminal device may determine three feedback information sets. A feedback information set 0 corresponds to the resource block set 0, and the feedback information set 0 includes feedback information#a to feedback information#c. A feedback information set 1 corresponds to the resource block set 1, and the feedback information set 1 includes feedback information#a and feedback information#d. A feedback information set 2 corresponds to the resource block set 2, and the feedback information set 2 includes feedback information#e and feedback information#f.

Further, the first terminal device selects feedback information#a with a highest priority from the feedback information set 0, selects feedback information#a with a highest priority from the feedback information set 1, and selects feedback information#e with a highest priority from the feedback information set 2, to determine that the N1 pieces of feedback information include feedback information#a and feedback information#e.

Manner 2:

The first terminal device determines the N1 pieces of feedback information from the M pieces of feedback information in descending order of priorities of feedback information. The N1 pieces of feedback information determined by the first terminal device include the following feedback information: feedback information with a highest priority in the M pieces of feedback information, and an mth piece of feedback information in the M pieces of feedback information. A resource block set used to transmit the mth piece of feedback information does not overlap a resource block set used to transmit feedback information whose priority is higher than or equal to that of the mth piece of feedback information, where m is a positive integer, and $1 \leq m \leq M$.

In other words, the first terminal device sequentially determines, in descending order of the priorities of the feedback information, whether to add a first piece of feedback information, a second piece of feedback information, ..., and an Mth piece of feedback information that are ranked in order of the priorities in the M pieces of feedback information into the N1 pieces of feedback information. The first piece of feedback information has a highest priority, so that the first terminal device determines to add the first piece of feedback information into the N1 pieces of feedback information. For an mth piece of feedback information, $2 \leq m \leq M$, and if a resource block set used to transmit the mth piece of feedback information does not overlap resource block sets used to transmit the first m-1 pieces of feedback information, the first terminal device adds the mth piece of feedback information into the N1 pieces of feedback information; or if the resource block set used to transmit the mth piece of feedback information overlaps the resource block sets used to transmit the first m-1 pieces of feedback information, the first terminal device does not add the mth piece of feedback information into the N1 pieces of feedback information.

It should be noted that if the M pieces of feedback information include a plurality of pieces of feedback information with a highest priority, the feedback information with a highest priority in the M pieces of feedback information is one of the plurality of pieces of feedback information with a highest priority in the M pieces of feedback information. It should be further noted that, if there are a plurality of pieces of feedback information with a same priority in the M pieces of feedback information, the plurality of pieces of feedback information with the same priority may be sorted in a random order.

For example, as shown in (a) in FIG. 7, it is assumed that the first terminal device has seven pieces of to-be-fed-back feedback information (that is, M=7), which are respectively feedback information#1 to feedback information#7, and priority values corresponding to feedback information#1 to feedback information#7 are 1 to 7. A resource block set 0 is used to transmit feedback information#1 to feedback information#3, a resource block set 1 is used to transmit feedback information#4, a resource block set 2 is used to transmit feedback information#5 and feedback information#6, and a resource block set 3 is used to transmit feedback information#7.

In descending order of priorities, in feedback information#1 to feedback information#7, feedback information ranked first to seventh is respectively feedback information#1 to feedback information#7. Further, the first terminal device adds feedback information#1 ranked first into the N1 pieces of feedback information. For feedback information#2 ranked second and feedback information#3 ranked third, because the resource block set used to transmit feedback information#2 and feedback information#3 overlaps the resource block set used to transmit feedback information#1, the first terminal device does not add feedback information#2 and feedback information#3 into the N1 pieces of feedback information. For feedback information#4 ranked fourth, because the resource block set used to transmit feedback information#4 does not overlap the resource block set used to transmit feedback information#1 to feedback information#3, the first terminal device adds feedback information#4 into the N1 pieces of feedback information. For feedback information#5 ranked fifth, because the resource block set used to transmit feedback information#5 does not overlap the resource block sets used to transmit feedback information#1 to feedback information#4, the first terminal device adds feedback information#5 into the N1 pieces of feedback information. For feedback information#6 ranked sixth, because the resource block set used to transmit feedback information#6 overlaps the resource block set used to transmit feedback information#5, the first terminal device does not add feedback information#6 into the N1 pieces of feedback information. For feedback information#7 ranked seven[th], because the resource block set used to transmit feedback information#7 does not overlap the resource block sets used to transmit feedback information#1 to feedback information#6, the first terminal device adds feedback information#7 into the N1 pieces of feedback information. Therefore, the first terminal device determines that the N1 pieces of feedback information include feedback information#1, feedback information#4, feedback information#5, and feedback information#7.

For another example, as shown in (b) in FIG. 7, it is assumed that the first terminal device has six pieces of to-be-fed-back feedback information (that is, M=6), which are respectively feedback information#a to feedback information#f, and priority values corresponding to feedback information#a to feedback information#f are 1 to 6. A resource block set 0 is used to transmit feedback information#a to feedback information#c, a resource block set 1 is used to transmit feedback information#a and feedback information#d, and a resource block set 2 is used to transmit feedback information#e and feedback information#f.

In descending order of priorities, in feedback information#a to feedback information#f, feedback information ranked first to sixth is respectively feedback information#a to feedback information#f. Further, the first terminal device adds feedback information#a ranked first into the N1 pieces of feedback information. For feedback information#b ranked second and feedback information#d ranked fourth, because the resource block sets used to transmit feedback information#b to feedback information#d overlap the resource block set used to transmit feedback information#a, the first terminal device does not add feedback information#b to feedback information#d into the N1 pieces of feedback information. For feedback information#e ranked fifth, because the resource block set used to transmit feedback information#e does not overlap the resource block sets used to transmit feedback information#a to feedback information#d, the first terminal device adds feedback information#e into the N1 pieces of feedback information. For feedback information#f ranked sixth, because the resource block set used to transmit feedback information#f overlaps the resource block set used to transmit feedback information#e, the first terminal device does not add feedback information#f into the N1 pieces of feedback information. Therefore, the first terminal device determines that the N1 pieces of feedback information include feedback information#a and feedback information#e.

Optionally, if $N1 \leq N_{max}$, the first terminal device may further determine N2 pieces of feedback information or Y2 pieces of feedback information, where both N2 and Y2 are positive integers. $N_{max}$ represents a maximum quantity of feedback information capable of being simultaneously sent by the first terminal device.

The N2 pieces of feedback information belong to M' pieces of feedback information, the M' pieces of feedback information include feedback information other than the N1 pieces of feedback information in the M pieces of feedback information, and N=N1+N2.

As described in S520 above, if the first terminal device receives the Y' pieces of data on the Y resource block sets, the resources for the Y" pieces of feedback information corresponding to the Y' pieces of data are located in the Y resource block sets and the first time unit, the Y resource block sets include the S resource block sets, and the first time unit on each of the S resource block sets belongs to one COT, the first terminal device may determine the Y2 pieces of feedback information from the Y* pieces of feedback information, the Y* pieces of feedback information include feedback information other than the N1 pieces of feedback information in the Y" pieces of feedback information. Y is greater than S.

The following describes a manner in which the first terminal device determines the N2 pieces of feedback information from the M' pieces of feedback information.

For example, if the first terminal device does not obtain a downlink (downlink, DL) path loss (path loss, PO) parameter (dl-PO-PSFCH) corresponding to the M pieces of feedback information, and $M \leq N_{max}$, or $M-N1 \leq N_{max}-N1$, the first terminal device selects the N2 pieces of feedback information from the M' pieces of feedback information, where N2=M-N1. It may be understood that, $M \leq N_{max}$, or $M-N1 \leq N_{max}-N1$ represents that a quantity of M-N1 pieces of feedback information is less than a capability upper limit of the first terminal device.

For another example, if the first terminal device does not obtain a downlink path loss parameter corresponding to the M pieces of feedback information, and $M > N_{max}$, or $M-N1 > N_{max}-N1$, the first terminal device selects the N2 pieces of feedback information with a highest priority from the M' pieces of feedback information, where $N2=N_{max}-N1$.

For example, after the first terminal device adds feedback information#a and feedback information#e in feedback information#a to feedback information#f into the N1 pieces of feedback information, because $N_{max}=4$ and N1=2, the first terminal device may further select two pieces of feedback information with a highest priority from feedback information#b to feedback information#d and feedback information#f, that is, feedback information#b and feedback information#c.

For another example, if the first terminal device obtains the downlink path loss parameter corresponding to the M pieces of feedback information, and $M \leq N_{max}$, or $M-N1 \leq N_{max}-N_1$, the first terminal device selects the N2 pieces of feedback information from the M' pieces of feedback information in descending order of priorities, where $N2 \geq \max(1, \sum_{i=1}^{K} M_i)$.

For $1 \leq i \leq 8$, $M_i$ represents a quantity of feedback information with a priority value i in the M' pieces of feedback information, and for $i > 8$, $M_i$ represents a quantity of feedback information with a priority value (i-8) in feedback information of conflict information. K represents a maximum K value meeting that a sum of transmit power corresponding to $[\max(1, \sum_{i=1}^{K} M_i) + N1]$ pieces of feedback information is less than maximum transmit power $P_{CMAX}$ supported by the first terminal device. It may be understood that, $M \leq N_{max}$, or $M-N1 \leq N_{max}-N1$ represents that a quantity of M-N1 pieces of feedback information is less than a capability upper limit of the first terminal device.

For another example, if the first terminal device obtains the downlink path loss parameter corresponding to the M pieces of feedback information, and $M > N_{max}$, or $M-N1 > N_{max}-N1$, the first terminal device selects $N_{max}-N1$ pieces of feedback information from the M' pieces of feedback information in descending order of priorities. Further, if a sum of transmit power corresponding to $N_{max}$ pieces of feedback information is greater than $P_{CMAX}$, the first terminal device selects the N2 pieces of feedback information from the M' pieces of feedback information in descending order of priorities, where $N2 \geq \max(1, \sum_{i=1}^{K} M_i)$.

For example, after the first terminal device adds feedback information#a and feedback information#e in feedback information#a to feedback information#f into the N1 pieces of feedback information, because $N_{max}=4$ and N1=2, the first terminal device selects two pieces of feedback information from feedback information#b to feedback information#d and feedback information#f in descending order of priorities, that is, feedback information#b and feedback information#c. Further, when a sum of transmit power corresponding to four pieces of feedback information is greater than $P_{CMAX}$, the first terminal device selects the N2 pieces of feedback information from feedback information#b to feedback information#d and feedback information#f, where $N2 \geq \max(1, \sum_{i=1}^{K} M_i)$. Assuming that a sum of transmit power corresponding to ($M_2$ +N1) pieces of feedback information is less than $P_{CMAX}$, and a sum of transmit power corresponding to ($M_2+M_3+N1$) pieces of feedback information is greater than $P_{CMAX}$, the first terminal device determines to select one piece of feedback information from feedback information#b to feedback information#d and feedback information#f, that is, feedback information#b. $M_2$ represents a quantity of feedback information with a priority value 2, and the feedback information with a priority value 2 includes feedback information#b. Therefore, $M_2=1$. $M_3$ represents a quantity of feedback information with a priority value 3, and the feedback information with a priority value 3 includes feedback information#c. Therefore, $M_3=1$.

For a manner in which the first terminal device determines the Y2 pieces of feedback information from the Y* pieces of feedback information, refer to the foregoing manner in which the first terminal device determines the N2 pieces of feedback information from the M' pieces of feedback information.

Further, when the first terminal device determines the N2 pieces of feedback information, the first terminal device sends the N pieces of feedback information, where the N pieces of feedback information include the N2 pieces of feedback information and the N1 pieces of feedback information. When the first terminal device determines the Y2 pieces of feedback information, the first terminal device sends the N pieces of feedback information and the Y2 pieces of feedback information, where the N pieces of feedback information include the N1 pieces of feedback information.

Optionally, if the first terminal device receives P pieces of data on the S resource block sets, and none of the first time unit on each of the S resource block sets belongs to one COT, the first terminal device determines the N pieces of feedback information from the M pieces of feedback information in descending order of priorities of feedback information, and sends the N pieces of feedback information. It may be understood that when the first terminal device selects feedback information in descending order of priorities, transmission of a high-priority service can be preferentially ensured.

Optionally, a phase rotation value corresponding to an $n^{th}$ piece of feedback information in the N pieces of feedback information is related to one of the following: an index of a resource block set used to transmit the $n^{th}$ piece of feedback information, where n=1, 2, ..., N, and n=1, 2, ..., N represents that a value of n is each value in 1, 2, ..., N. The following describes, with reference to a method 900, a manner in which the first terminal device determines the phase rotation value corresponding to the $n^{th}$ piece of feedback information. For brevity, details are not described herein.

Optionally, before the first terminal device sends the N pieces of feedback information, the method 500 further includes: The first terminal device performs one time of LBT, where the one time of LBT corresponds to N3 pieces of feedback information in the N pieces of feedback information, and N3 is an integer greater than 1. Further, after the one time of LBT succeeds, the first terminal device sends the N pieces of feedback information. The following describes, with reference to a method 1100, a manner in which the first terminal device performs one time of LBT. For brevity, details are not described herein.

Optionally, before the first terminal device sends the N pieces of feedback information, the method 500 further includes: The first terminal device performs N3 times of LBT, where the N3 times of LBT correspond to N3 pieces of feedback information in the N pieces of feedback information, and N3 is an integer greater than 1. Further, after at least one of the N3 times of LBT succeeds, the first terminal device sends the N pieces of feedback information. The following describes, with reference to a method 1500, a manner in which the first terminal device performs the N3 times of LBT. For brevity, details are not described herein.

Optionally, if the first terminal device has to-be-received feedback information, and a resource for the to-be-received feedback information is located in the first time unit and at least one of the S resource block sets, the first terminal device preferentially sends at least one of the N pieces of feedback information on the at least one resource block set and in the first time unit. In other words, the first terminal device gives up receiving the to-be-received feedback information.

Optionally, if a resource for to-be-received feedback information is the same as a resource for at least one of the N pieces of feedback information, and a priority of the to-be-received feedback information is the same as a priority of the at least one piece of feedback information, the first terminal device preferentially sends the at least one piece of feedback information.

In this embodiment of this application, if the first terminal device receives the plurality of pieces of data on the S resource block sets, and the resources for the M pieces of feedback information corresponding to the plurality of pieces of data are located in the S resource block sets and the first time unit, the first terminal device sends at least one piece of feedback information on each of the S resource block sets, so that a waste of feedback resources in the resource block sets can be avoided.

In addition, when a first time unit on a resource block set in the S resource block sets belongs to one COT, because the first terminal device sends at least one piece of feedback information on each of the S resource block sets, another terminal device cannot successfully preempt a channel in the first time unit, and therefore, COT interruption is not caused.

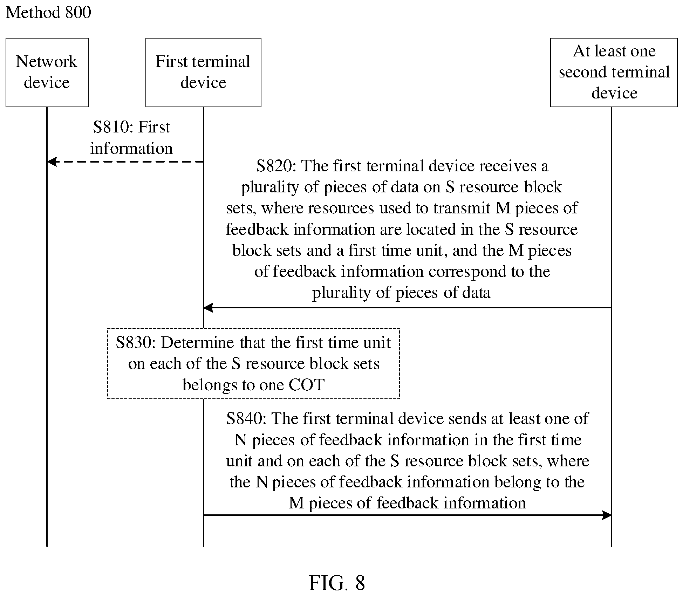

FIG. 8 is a schematic flowchart of another sidelink communication method 800 according to an embodiment of this application. The method 800 may include the following steps.

S810: A first terminal device sends first information to a network device.

Correspondingly, the network device receives the first information from the first terminal device.

The first information includes at least one of the following: a quantity $N_{set}$ of resource block sets supported by the first terminal device, and a maximum quantity $N_{\max}^{set}$ of feedback information capable of being simultaneously sent by the first terminal device on one resource block set.

$N_{set}$ It may also be understood as that the first terminal device is capable of simultaneously sending feedback information on $N_{set}$ resource block sets.

For example, if the network device knows a maximum quantity $N_{\max}$ of feedback information capable of being simultaneously sent by the first terminal device, the first information may include the quantity $N_{set}$ of resource block sets supported by the first terminal device. Correspondingly, the network device may determine that $N_{\max}^{set}$ is equal to a ratio of $N_{\max}$ to $N_{set}$.

For example, if the network device knows a maximum quantity $N_{\max}$ of feedback information capable of being simultaneously sent by the first terminal device, the first information may include the maximum quantity $N_{\max}^{set}$ of feedback information capable of being simultaneously sent by the first terminal device on one resource block set. Correspondingly, the network device may determine that $N_{set}$ is equal to a ratio of $N_{\max}$ to $N_{\max}^{set}$.

It should be noted that S810 is an optional step. For example, if the quantity $N_{set}$ of resource block sets supported by the first terminal device and/or the maximum quantity $N_{\max}^{set}$ of feedback information capable of being simultaneously sent by the first terminal device on one resource block set are parameters configured by the network device for the first terminal device, S810 does not need to be performed in the method 800. Alternatively, if the first terminal device sends the first information to the network device before the first terminal device performs the method 800, S810 does not need to be performed in the method 800.

S820: The first terminal device receives a plurality of pieces of data on S resource block sets.

For more descriptions of S820, refer to S510 in the foregoing method 500.

Optionally, the method 800 further includes S830.

S830: The first terminal device determines that a first time unit on each of the S resource block sets belongs to one COT.

For example, a slot in which the first time unit is located is denoted as a slot n. If the first terminal device detects PSCCH transmission on a resource block set and in the slot n, the first terminal device determines that the first time unit on the resource block set belongs to one COT.

For example, a slot in which the first time unit is located is denoted as a slot n. If the first terminal device detects PSCCH transmission in a slot before the slot n and on a resource block set, and determines, based on information in the transmission, that a resource occupied by the transmission includes the slot n, the first terminal device determines that the first time unit in the resource block set belongs to one COT. Optionally, the information in the transmission includes transmission duration or information related to transmission duration. For example, the information in the transmission includes a transmission end moment.

In a possible implementation, if the first terminal device receives Y' pieces of data on Y resource block sets, resources used to transmit Y" pieces of feedback information are located in the first time unit and the Y resource block sets, and the Y" pieces of feedback information correspond to the Y' pieces of data, the first terminal device determines whether the first time unit on each of the Y resource block sets belongs to one COT. Y, Y', and Y" are all integers greater than 1. Further, if the first time unit on a resource block set in the Y resource block sets belongs to one COT, the first terminal device adds the resource block set into the S resource block sets. After sequentially determining whether the first time unit on each of the Y resource block sets belongs to one COT, the first terminal device may determine S' resource block sets, where the first time unit on each of the S' resource block sets belongs to one COT. In this implementation, S' may be less than Y, or S' may be equal to Y.

In a possible implementation, if the first terminal device receives Y' pieces of data on Y resource block sets, resources used to transmit Y" pieces of feedback information are located in the first time unit and the Y resource block sets, and Y1 is greater than $N_{max}$, the first terminal device determines whether the first time unit on each of the Y resource block sets belongs to one COT, to determine S' resource block sets. $N_{max}$ represents a maximum quantity of feedback information capable of being simultaneously sent by the first terminal device. Y1 is a quantity of feedback information selected by the first terminal device from the Y" pieces of feedback information. For a manner in which the first terminal device selects the Y1 pieces of feedback information from the Y" pieces of feedback information, refer to a manner in which the first terminal device determines N1 pieces of feedback information from the M pieces of feedback information in S840 below. In this implementation, S' may be less than Y, or S' may be equal to Y.

In a possible implementation, if the first terminal device receives Y' pieces of data on Y resource block sets, resources used to transmit Y" pieces of feedback information are located in the first time unit and the Y resource block sets, and Y is greater than $N_{set}$, the first terminal device determines whether the first time unit on each of the Y resource block sets belongs to one COT, to determine S' resource block sets. In this implementation, S' may be less than Y, or S' may be equal to Y

It should be noted that first time units on different resource block sets in the S' resource block sets belong to a same COT or different COTs. This is not limited in embodiments of this application.

It should be further noted that, if the first terminal device determines the S' resource block sets, and S1 is greater than $N_{max}$ and/or S' is greater than $N_{set}$, the first terminal device randomly selects the S resource block sets from the S' resource block sets, or the first terminal device selects the S resource block sets from the S' resource block sets in descending order of priorities of feedback information transmitted by the resource block sets, so that $N1 \leq N_{max}$ and/or $S \leq N_{set}$. The plurality of pieces of data received by the first terminal device on the S resource block sets correspond to the M pieces of feedback information, and N1 is a quantity of feedback information selected by the first terminal device from the M pieces of feedback information. For a manner in which the first terminal device selects N1 pieces of feedback information from the M pieces of feedback information, refer to the following description in S840.

If the first terminal device determines the S' resource block sets, $S1 < N_{max}$, and or $S' \leq N_{set}$, the first terminal device determines the S' resource block sets as the S resource block sets. The plurality of pieces of data received by the first terminal device on the S' resource block sets correspond to S" pieces of feedback information. S1 is a quantity of feedback information selected by the first terminal device from the S" pieces of feedback information. For a manner in which the first terminal device selects the S1 pieces of feedback information from the S" pieces of feedback information, refer to a manner in which the first terminal device determines the N1 pieces of feedback information from the M pieces of feedback information in S840 below.

S840: The first terminal device sends at least one of N pieces of feedback information in the first time unit and on each of the S resource block sets.

The N pieces of feedback information belong to the M pieces of feedback information, and N is a positive integer less than or equal to M.

It may be understood that the first terminal device sends the N pieces of feedback information to all or some of the at least one second terminal device in the first time unit and on the S resource block sets. For example, N may also be represented as $N_{TX,PSFCH}$.

A manner in which the first terminal device determines the N pieces of feedback information is as follows:
The first terminal device determines, based on the M pieces of feedback information, S feedback information sets corresponding to the S resource block sets, where a $s^{th}$ feedback information set in the S feedback information sets includes at least one of the M pieces of feedback information, a $s^{th}$ resource block set is used to transmit feedback information included in a feedback information set corresponding to the $s^{th}$ resource block set, and s=1, 2, ..., S; and the first terminal device determines the N pieces of feedback information based on $N_{max}^{set}$ and the S feedback information sets, where a quantity of feedback information that is in the N pieces of feedback information and that belongs to a same feedback information set does not exceed $N_{max}^{set}$, where s=1, 2, ..., S represents that a value of s is each value in 1, 2, ..., S.

In other words, the first terminal device groups the M pieces of feedback information based on resource block sets used to transmit feedback information, so that the first terminal device selects a maximum quantity of $N_{max}^{set}$ pieces of feedback information from each group, to obtain the N pieces of feedback information. In other words, the first terminal device selects the N pieces of feedback information from the M pieces of feedback information for transmission at a granularity of a resource block set, and ensures that a quantity of feedback information transmitted on each resource block set does not exceed $N_{max}^{set}$.

Optionally, a priority of feedback information that is in the N pieces of feedback information and that belongs to the $s^{th}$ resource block set is higher than or equal to a priority of feedback information that is in the $s^{th}$ feedback information set and that does not belong to the N pieces of feedback information. In other words, the first terminal device selects the maximum quantity of $N_{max}^{set}$ pieces of feedback information from the $s^{th}$ feedback information set in descending order of priorities of feedback information, and adds the feedback information into the N pieces of feedback information.

A priority of feedback information is a priority of data corresponding to the feedback information. In other words, a priority value of the feedback information is the same as a priority value of the data corresponding to the feedback information.

For example, as shown in (b) in FIG. 7, it is assumed that $N_{set}$=4, $N_{max}^{set}=1$, and the first terminal device has six pieces of to-be-transmitted feedback information (that is, M=6), which are respectively feedback information#a to feedback information#f, and priority values corresponding to feedback information#a to feedback information#f are 1 to 6. If a resource block set 0 is used to transmit feedback information#a and feedback information#b, the first terminal device adds feedback information#a with a highest priority into the N pieces of feedback information. If a resource block set 1 is used to transmit feedback information#c and feedback information#d, the first terminal device adds feedback information#c with a highest priority into the N pieces of feedback information. If a resource block set 2 is used to transmit feedback information#e and feedback information#f, the first terminal device adds feedback information#e with a highest priority into the N pieces of feedback information. Therefore, the first terminal device determines that the N pieces of feedback information include feedback information#a, feedback information#c, and feedback information#e.

Optionally, a phase rotation value corresponding to an $n^{th}$ piece of feedback information in the N pieces of feedback information is related to one of the following: an index of a resource block set used to transmit the $n^{th}$ piece of feedback information, where n=1, 2, ..., N, and n=1, 2, ..., N represents that a value of n is each value in 1, 2, ..., N. The following describes, with reference to a method 900, a manner in which the first terminal device determines the phase rotation value corresponding to the $n^{th}$ piece of feedback information. For brevity, details are not described herein.

Optionally, before the first terminal device sends the N pieces of feedback information, the method 800 further includes: The first terminal device performs one time of LBT, where the one time of LBT corresponds to N3 pieces of feedback information in the N pieces of feedback information, and N3 is an integer greater than 1. Further, after the one time of LBT succeeds, the first terminal device sends the N pieces of feedback information. The following describes, with reference to a method 1100, a manner in which the first terminal device performs one time of LBT. For brevity, details are not described herein.

Optionally, before the first terminal device sends the N pieces of feedback information, the method 800 further includes: The first terminal device performs N3 times of LBT, where the N3 times of LBT correspond to N3 pieces of feedback information in the N pieces of feedback information, and N3 is an integer greater than 1. Further, after at least one of the N3 times of LBT succeeds, the first terminal device sends the N pieces of feedback information. The following describes, with reference to a method 1500, a manner in which the first terminal device performs the N3 times of LBT. For brevity, details are not described herein.

In this embodiment of this application, if the first terminal device receives a plurality of pieces of data on the S resource block sets, and resources for M pieces of feedback information corresponding to the plurality of pieces of data are located in the S resource block sets and the first time unit, the first terminal device selects the N pieces of feedback information from the M pieces of feedback information for transmission at a granularity of a resource block set, and a quantity of feedback information transmitted on each resource block set does not exceed the maximum quantity of feedback information capable of being simultaneously sent on one resource block set by the first terminal device.

Therefore, a waste of feedback resources on the resource block set can be avoided, and mutual impact between resource block sets is avoided.

In addition, when a first time unit on a resource block set in the S resource block sets belongs to one COT, because the first terminal device sends at least one piece of feedback information on each of the S resource block sets, another terminal device cannot successfully preempt a channel in the first time unit, and therefore, COT interruption is not caused.

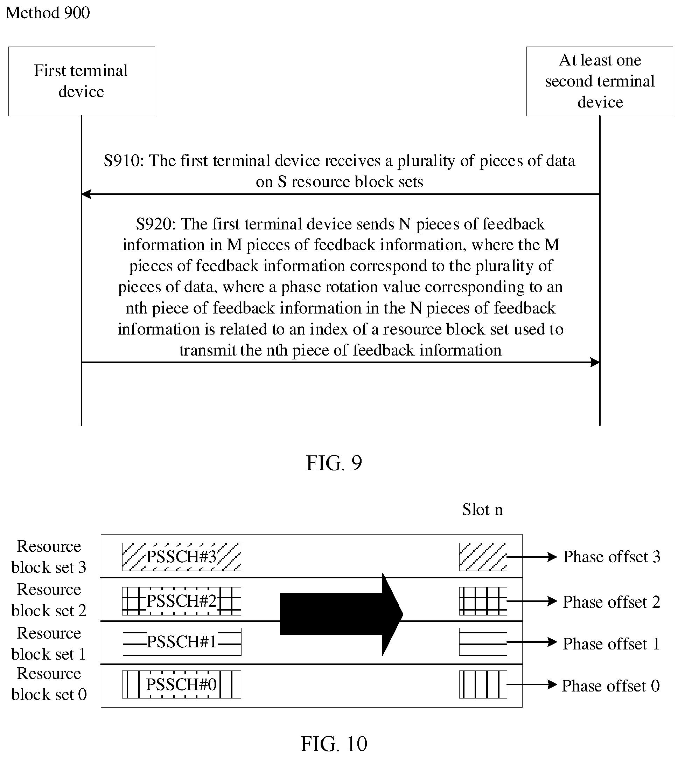

FIG. 9 is a schematic flowchart of a sidelink communication method 900 according to an embodiment of this application. The method 900 may include the following steps.

S910: A first terminal device receives a plurality of pieces of data on S resource block sets.

S is an integer greater than 1. For ease of description, a quantity of the plurality of pieces of data is denoted as P, where P is an integer greater than 1.

The P pieces of data received by the first terminal device are sent by at least one second terminal device to the first terminal device. Any one of the at least one second terminal device may communicate with the first terminal device in unicast mode, or may communicate with the first terminal device in multicast mode. This is not limited in this application. The at least one second terminal device may be one second terminal device, or may be a plurality of second terminal devices. One second terminal device may send one piece of data to the first terminal device, or may send two or more pieces of data to the first terminal device.

It should be noted that, that the first terminal device receives the P pieces of data on the S resource block sets means that the first terminal device receives at least one of the P pieces of data on each of the S resource block sets. The first terminal device may receive one piece of data on a plurality of resource block sets, or may receive a plurality of pieces of data on one resource block set, or may receive one piece of data on one resource block set.

It should be further noted that the first terminal device may receive the P pieces of data in a same time unit on the S resource block sets, or receive the P pieces of data in different time units on the S resource block sets. This is not limited in this application.

It should be further noted that the P pieces of data in this embodiment of this application are data for which the first terminal device needs to feed back a decoding result. In other words, the first terminal device may receive P" pieces of data on the S resource sets, and the first terminal device needs to feed back a decoding result of the P pieces of data in the P" pieces of data, but does not need to provide feedback for data other than the P pieces of data in the P" pieces of data.

Optionally, resources used to transmit M pieces of feedback information corresponding to the P pieces of data are located in the S resource block sets and the first time unit, where M is an integer greater than 1. For a correspondence between the P pieces of data and the M pieces of feedback information, refer to the foregoing description in S510.

S920: The first terminal device sends N pieces of feedback information in the M pieces of feedback information.

A phase rotation value (cyclic shift) corresponding to an $n^{th}$ piece of feedback information in the N pieces of feedback information is related to an index of a resource block set used to transmit the $n^{th}$ piece of feedback information, where n=1, 2, ..., N, and n=1, 2, ..., N represents that a value of n is each value in 1, 2, ..., N.

An index of a resource block set is related to a quantity of resource block sets included in a resource pool in which the resource block set is located. For example, if the resource pool in which the resource block set is located includes four resource block sets, the index of the resource block set may be one of 0, 1, 2, and 3, or the index of the resource block set may be one of 1, 2, 3, and 4.

The phase rotation value of the $n^{th}$ piece of feedback information and a base sequence r(n) are used to determine a sequence corresponding to the $n^{th}$ piece of feedback information. The sequence $r^{\alpha}(n)$ of the $n^{th}$ piece of feedback information, the base sequence r(n), and the phase rotation value $\alpha^n$ corresponding to the $n^{th}$ piece of feedback information meet the following relationship: $r^{\alpha}(n) = r \times e^{j\alpha n}$, $0 \le n \le M_{ZC}$, where $M_{ZC}$ represents a length of the base sequence.

For example, the first terminal device determines, according to formula (1), the phase rotation value $\alpha_l^n$ corresponding to the $n^{th}$ piece of feedback information:

$$\alpha_l^n = \frac{2\pi}{N_{sc}^{RB}}((m_0 + \Delta_{set}^n * i_{set}^n + m_{cs} + n_{cs}(n_{s,f}^{\mu}, l+l')) \bmod N_{sc}^{NB}) \tag{1}$$

$\Delta_{set}^n$ represents an offset corresponding to the resource block set used to transmit the $n^{th}$ piece of feedback information, and $i_{set}^n$ represents the index of the resource block set used to transmit the $n^{th}$ piece of feedback information. $N_{sc}^{NB}$ represents a quantity of subcarriers in a resource block, for example, $N_{sc}^{NB} = 12$. $n_{s,f}^{\mu}$ represents a slot number (slot number) corresponding to a subcarrier spacing $\mu$ in a radio frame, and in formula (1), $n_{s,f}^{\mu}$ represents a slot number of a slot in which a resource used to transmit the $n^{th}$ piece of feedback information is located.

$l$ represents a number of a symbol of a resource used to transmit the $n^{th}$ piece of feedback information, and $l=0$ represents a number of a first symbol of a resource used to transmit the $n^{th}$ piece of feedback information. To be specific, if the resource used to transmit the $n^{th}$ piece of feedback information includes L symbols, $l=0, 1, ..., L-1$.

$l'$ represents a symbol index that is of the first symbol included in the resource used to transmit the $n^{th}$ piece of feedback information and that is in a slot. For example, if the resource used to transmit the $n^{th}$ piece of feedback information is located on a symbol 12 in a slot n, $l'=12$.

$m_0$ represents a phase of an ACK sequence in a PSFCH resource pair, and $m_{cs}$ represents a phase offset of a NACK sequence relative to an ACK sequence in a PSFCH resource pair.

A function $n_{cs}(n_{s,f}^{\mu},l)$ is represented as $n_{cs}(n_{s,f}^{\mu},l) = \sum_{m=0}^{7} 2^m c(8N_{symb}^{slot}n_{s,f}^{\mu} + 8l + m)$ , and $N_{symb}^{slot}$ represents a symbol quantity in one slot. For example, $N_{symb}^{slot}=14$ , and c(i) represents a value of a sequence number i in a pseudo-random sequence.

A manner of determining the sequence c(i) is as follows:

$$c(i)=[x_1(i+N_c)+x_2(i+N_c)]\bmod 2;$$

$$x_1(i+31)=[x_1(i+3)+x_1(i))\bmod 2;$$

$$x_2(i+31)=[x_2(i+3)+x_2(i+2)+x_2(i+1)+x_2(i)]\bmod 2.$$

Nc=1600, and an initialized sequence of the initial sequence $x_1(i+31)$ is $x_1(0)=1$, $x_1(i)=0$, i=1,2, ...,30. An initialized sequence of the second sequence $x_2(i)$ may be represented as $c_{init} = \sum_{i=0}^{30} x_2(i) \times 2^i$ , that is, $c_{init}$ represents a decimal value of the initialized sequence of the sequence $x_2(i)$. After a value of $c_{init}$ is determined, the initialized sequence of $x_2(i)$ (a length of the initialized sequence is also 31) may be obtained, and then $x_2(i)$ may be determined. Then, with reference to the initial sequence $x_1(i)$, the first terminal device may determine c(i).

For another example, the first terminal device determines, according to the following formula (2), the phase rotation value $\alpha_l^n$ corresponding to the $n^{th}$ piece of feedback information:

$$\alpha_l^n = \frac{2\pi}{N_{sc}^{RB}}((m_0 + \Delta_{set}^n * i^n + \Delta_{RB}^n * i_{RB}^n + m_{cs} + n_{cs}(n_{s,f}^{\mu},l+l'))\bmod N_{sc}^{NB}) \qquad (2)$$

$\Delta_{set}^n$ represents an offset corresponding to the resource block set used to transmit the $n^{th}$ piece of feedback information, and $\Delta_{RB}^n$ represents an offset corresponding to a resource block that is used to transmit the $n^{th}$ piece of feedback information and that is included in the resource block set used to transmit the $n^{th}$ piece of feedback information.

$i^n$ represents an index of a PRB in an interlace included in the resource block set used to transmit the $n^{th}$ piece of feedback information. For example, when each interlace includes I PRBs, $0 \le i^n \le I-1$. $i_{RB}^n$ represents an index of an RB that is used to transmit the $n^{th}$ piece of feedback information and that is included in the resource block set used to transmit the $n^{th}$ piece of feedback information. For example, when each resource block set includes 20 RBs, $0 \le i_{RB}^n \le 19$ .

Optionally, the offset corresponding to the resource block set used to transmit the $n^{th}$ piece of feedback information is related to one or more of the following: a quantity of resource block sets included in a resource pool, a frequency domain range of the resource pool, and a frequency domain position of the resource pool. The resource pool includes the resource block set used to transmit the $n^{th}$ piece of feedback information.

For example, if a quantity of resource block sets included in a resource pool n in which the resource block set used to transmit the nth piece of feedback information is located is 3, and a quantity of resource block sets included in a resource pool n' in which a resource block set used to transmit an n'th piece of feedback information is located is 4, $\Delta_{set}^{n}$ is different from $\Delta_{set}^{n'}$. For another example, if a resource pool n in which the resource block set used to transmit the nth piece of feedback information is located is in 2.402 GHz to 2.442 GHz, and a resource pool n' in which a resource block set used to transmit an n'th piece of feedback information is located is in 2.442 GHz to 2.482 GHz, $\Delta_{set}^{n}$ is different from $\Delta_{set}^{n'}$, where n'=1, 2, ..., N, and n'≠n.

Optionally, that the first terminal device sends N pieces of feedback information includes: The first terminal device sends the N pieces of feedback information in a first time unit and at least two of the S resource block sets, where feedback information transmitted on different resource block sets in the at least two resource block sets corresponds to different phase rotation values.

For example, if resources used to transmit the M pieces of feedback information are located in the S resource block sets and the first time unit, the first terminal device determines the N pieces of feedback information from the M pieces of feedback information according to the foregoing method 500 or the foregoing method 800, and further the first terminal device sends at least one of the N pieces of feedback information in the first time unit and on each of the S resource block sets.

Because a phase rotation value of feedback information is related to an index of a resource block set used to transmit the feedback information, a phase rotation value corresponding to the feedback information transmitted on the sth resource block set is different from a phase rotation value corresponding to feedback information transmitted on an s'[th] resource block set, and the sth resource block set and the s'[th] resource block set belong to the S resource block sets, where s=1, 2, ..., S, s'=1, 2, ..., S, and s≠s'.

As shown in FIG. 10, the first terminal device sends four pieces of feedback information on a resource block set 0 to a resource block set 3 and in a slot n. If indexes of the resource block set 0 to the resource block set 3 are respectively 0 to 3, based on the foregoing formula (1), feedback information transmitted on the resource block set 0 corresponds to a phase offset 0, that is, an offset is $\Delta_{set}^{0} * i_{set}^{0} = 0$; feedback information transmitted on a resource block set 1 corresponds to a phase offset 1, that is, an offset is $\Delta_{set}^{1} * i_{set}^{1} = \Delta_{set}^{1}$; feedback information transmitted on a resource block set 2 corresponds to a phase offset 2, that is, an offset is $\Delta_{set}^{2} * i_{set}^{2} = 2\Delta_{set}^{2}$; and feedback information transmitted on the resource block set 3 corresponds to a phase offset 3, that is, an offset is $\Delta_{set}^{3} * i_{set}^{3} = 3\Delta_{set}^{3}$. The resource block set 0 to the resource block set 3 belong to a same resource pool, and $\Delta_{set}^{0} = \Delta_{set}^{1} = \Delta_{set}^{2} = \Delta_{set}^{3}$.

Because a phase rotation value of feedback information is related to an index of a resource block set used to transmit the feedback information, a phase rotation value corresponding to the feedback information transmitted on the sth resource block set is different from a phase rotation value corresponding to feedback information transmitted on an s'[th] resource block set, and the sth resource block set and the s'[th] resource block set belong to the S resource block sets, where s=1, 2, ..., S, s'=1, 2, ..., S, and s≠s'.

Optionally, before the first terminal device sends the N pieces of feedback information, the method 900 further includes: The first terminal device performs one time of LBT, where the one time of LBT corresponds to N3 pieces of feedback information in the N pieces of feedback information, and N3 is an integer greater than 1. Further, after the one time of LBT succeeds, the first terminal device sends the N pieces of feedback information. The following describes, with reference to a method 1100, a manner in which the first terminal device performs one time of LBT. For brevity, details are not described herein.

Optionally, before the first terminal device sends the N pieces of feedback information, the method 900 further includes: The first terminal device performs N3 times of LBT, where the N3 times of LBT correspond to N3 pieces of feedback information in the N pieces of feedback information, and N3 is an integer greater than 1. Further, after at least one of the N3 times of LBT succeeds, the first terminal device sends the N pieces of feedback information. The following describes, with reference to a method 1500, a manner in which the first terminal device performs the N3 times of LBT. For brevity, details are not described herein.

In this embodiment of this application, the first terminal device determines, based on an index of a resource block set used to transmit feedback information, a phase rotation value corresponding to the feedback information, so as to help reduce a peak to average power ratio (peak to average power radio, PAPR). For example, if the first terminal device simultaneously sends feedback information on at least two resource block sets, when the at least two resource block sets have different indexes, feedback information transmitted on resource block sets of the at least two resource block sets corresponds to different phase rotation values, so that the PAPR can be reduced.

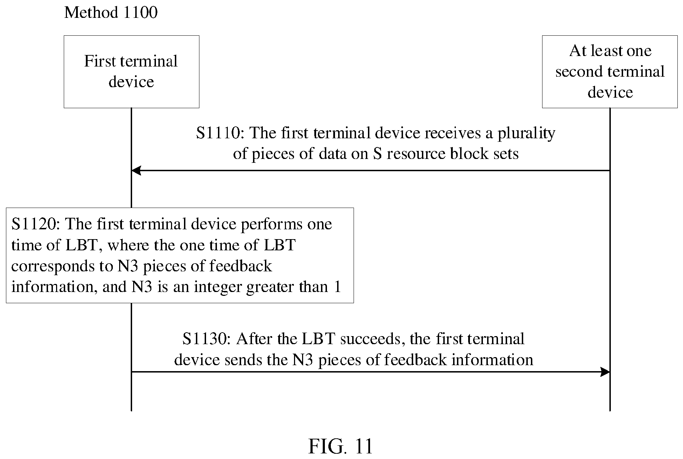

FIG. 11 is a schematic flowchart of a sidelink communication method 1100 according to an embodiment of this application. The method 1100 may include the following steps.

S1110: A first terminal device receives a plurality of pieces of data on S resource block sets.

S is an integer greater than 1. For ease of description, a quantity of the plurality of pieces of data is denoted as P, where P is an integer greater than 1.

For more descriptions of S1110, refer to S910 in the foregoing method 900.

S1120: The first terminal device performs one time of LBT.

The one time of LBT corresponds to N3 pieces of feedback information in M pieces of feedback information, resources used to transmit the N3 pieces of feedback information are located in a same first time unit, and N3 is an integer greater than 1. The M pieces of feedback information correspond to the P pieces of data. For a correspondence between the P pieces of data and the M pieces of feedback information, refer to the foregoing description in S510. That the one time of LBT corresponds to the N3 pieces of feedback information may also be understood as that the one time of LBT corresponds to data corresponding to the N3 pieces of feedback information.

It should be noted that after the first terminal device decodes the data or control information corresponding to the N3 pieces of feedback information, the first terminal device performs one time of LBT. A type of LBT performed by the first terminal device is not limited in this embodiment of this application. For a procedure of performing LBT by the first terminal device, refer to the foregoing descriptions. For brevity, details are not described herein again.

It should be further noted that if all the resources used to transmit the M pieces of feedback information are located in the first time unit, the first terminal device determines N pieces of feedback information from the M pieces of feedback information according to the method 500 or the method 800, and then starts one time of LBT for the N3 pieces of feedback information in the N pieces of feedback information.

Optionally, resource block sets used to transmit the N3 pieces of feedback information are a same resource block set.

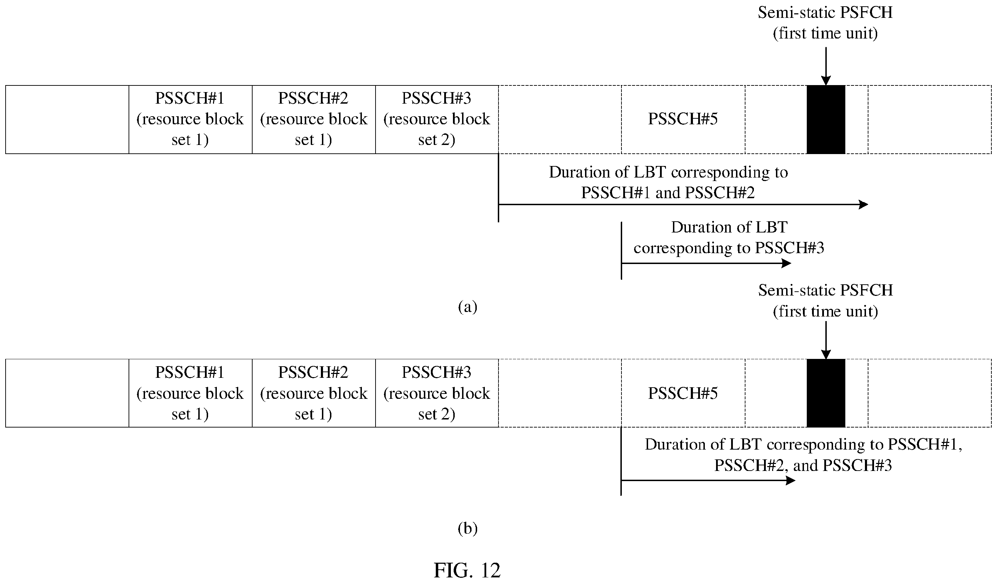

As shown in (a) in FIG. 12, the first terminal device receives data#1 on a resource block set 1 through PSSCH#1, receives data#2 on the resource block set 1 through PSSCH#2, and receives data#3 on a resource block set 2 through PSSCH#3. Resources for feedback information corresponding to data#1 to data#3 are all located in the first time unit. Because the resource for the feedback information corresponding to data#1 and the resource for the feedback information corresponding to data#2 are located in the same resource block set 1, the first terminal device starts one time of LBT for the feedback information corresponding to data#1 and the feedback information corresponding to data#2, and starts another time of LBT for the feedback information corresponding to data#3. The LBT started by the first terminal device for the feedback information corresponding to data#1 and the feedback information corresponding to data#2 may be referred to as LBT corresponding to PSSCH#1 and PSSCH#2. The LBT started by the first terminal device for the feedback information corresponding to data#3 may be referred to as LBT corresponding to PSSCH#3.

Optionally, at least two resource block sets used to transmit at least two of the N3 pieces of feedback information do not overlap. In other words, even if a resource for feedback information#A and a resource for feedback information#B are located in different resource block sets, provided that the resource for feedback information#A and the resource for feedback information#B are located in a same first time unit, the first terminal device may add feedback information#A and feedback information#B into the N3 pieces of feedback information.

As shown in (b) in FIG. 12, the first terminal device receives data#1 on a resource block set 1 through PSSCH#1, receives data#2 on the resource block set 1 through PSSCH#2, and receives data#3 on a resource block set 2 through PSSCH#3. Resources for feedback information corresponding to data#1 to data#3 are all located in the first time unit, and the first terminal device starts one time of LBT for the feedback information corresponding to data#1 to data#3. The LBT started by the first terminal device for the feedback information corresponding to data#1 to data#3 may be referred to as LBT corresponding to PSSCH#1, PSSCH#2, and PSSCH#3.

Optionally, data corresponding to the N3 pieces of feedback information is from a same second terminal device. In other words, for a plurality of pieces of data from a same second terminal device, resources for feedback information corresponding to the plurality of pieces of data are located in a same first time unit, and the first terminal device starts same LBT for the feedback information corresponding to the plurality of pieces of data.

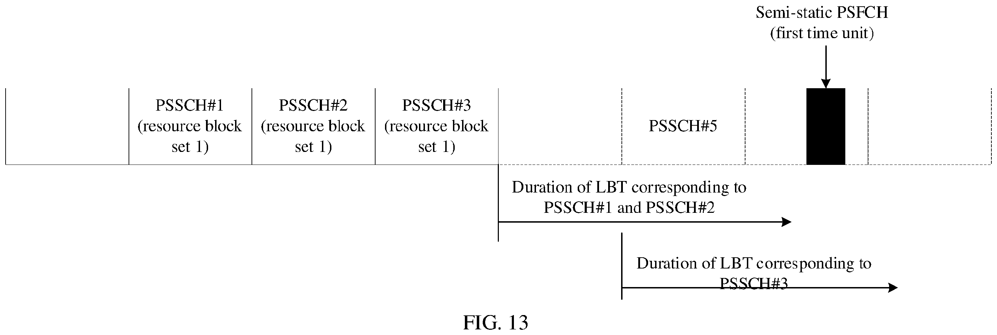

As shown in FIG. 13, the first terminal device receives data#1 on a resource block set 1 through PSSCH#1, receives data#2 on the resource block set 1 through PSSCH#2, and receives data#3 on the resource block set 1 through PSSCH#3. Resources for feedback information corresponding to data#1 to data#3 are all located in the first time unit. Data#1 and data#2 are from a same second terminal device (for example, UE2), and data#3 is from another second terminal device (for example, UE3). In this case, the first terminal device starts one time of LBT for the feedback information corresponding to data#1 and the feedback information corresponding to data#2, and starts another time of LBT for the feedback information corresponding to data#3. The LBT started by the first terminal device for the feedback information corresponding to data#1 and the feedback information corresponding to data#2 may be referred to as LBT corresponding to PSSCH#1 and PSSCH#2. The LBT started by the first terminal device for the feedback information corresponding to data#3 may be referred to as LBT corresponding to PSSCH#3.

Optionally, the data corresponding to the N3 pieces of feedback information is received by the first terminal device before a target moment, and a gap between the target moment and the first time unit is a preset value. The preset value is determined by a capability of the first terminal device, and the preset value is greater than or equal to shortest duration from a moment at which the first terminal device receives the data to a moment at which the first terminal device starts to send the feedback information corresponding to the data. For example, for PSSCH transmission occurring in a slot n, if a corresponding PSFCH resource occurs in a slot (n+a), and the slot (n+a) is the first slot in which a PSFCH resource exists after a slot (n+K-1), a minimum gap between the PSFCH resource and a PSSCH resource is (K-1) slots, and it may be further determined that the preset value is at least (K-1) slots.

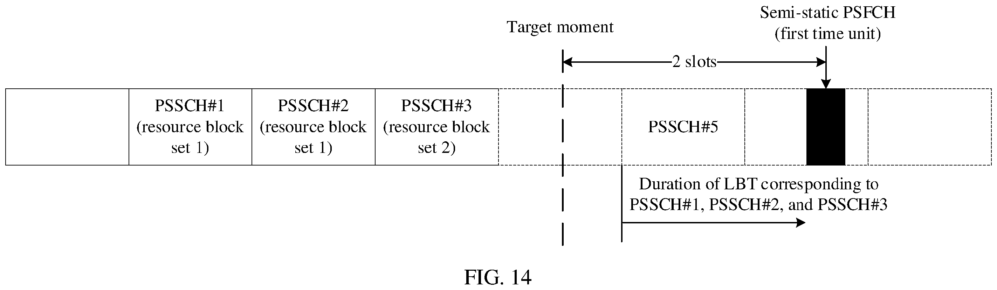

As shown in FIG. 14, assuming that K=3, a gap between the target moment and the first time unit is two slots. If the first terminal device receives data#1 to data#3 respectively through PSSCH#1 to PSSCH#3 before the target moment, the first terminal device starts same LBT for feedback information corresponding to data#1 to data#3. The LBT started by the first terminal device for the feedback information corresponding to data#1 to data#3 may be referred to as LBT corresponding to PSSCH#1, PSSCH#2, and PSSCH#3.

Optionally, the data corresponding to the N3 pieces of feedback information is same data.

As shown in FIG. 13, the first terminal device receives data#1 on a resource block set 1 through PSSCH#1, receives data#2 on the resource block set 1 through PSSCH#2, and receives data#3 on the resource block set 1 through PSSCH#3. Resources for feedback information corresponding to data#1 to data#3 are all located in the slot n. Data#1 and data#2 are same data, and data#3 is data different from data#1 and data#2. In this case, the first terminal device starts one time of LBT for the feedback information corresponding to data#1 and the feedback information corresponding to data#2, and starts another time of LBT for the feedback information corresponding to data#3.

Optionally, duration of the one time of LBT corresponding to the N3 pieces of feedback information is 25 μs or 16 μs. For example, if a resource for at least one of the N3 pieces of feedback information belongs to one COT, duration of the LBT started by the first terminal device for the N3 pieces of feedback information may be 25 μs or 16 μs.

Optionally, the duration of the one time of LBT corresponding to the N3 pieces of feedback information is determined by a priority value or a CAPC of feedback information with a highest priority in the N3 pieces of feedback information.

S1130: After the LBT succeeds, the first terminal device sends the N3 pieces of feedback information.

As shown in FIG. 13, before the first time unit, if the first terminal device successfully starts LBT for the feedback information corresponding to data#1 and the feedback information corresponding to data#2, the first terminal device sends, in the first time unit and on the resource block set 1, the feedback information corresponding to data#1 and the feedback information corresponding to data#2. Before the first time unit, if the LBT started by the first terminal device for data#3 fails, the first terminal device does not send, in the first time unit, the feedback information corresponding to data#3.

Optionally, if the first terminal device determines the N pieces of feedback information from the M pieces of feedback information, the first terminal device may further start LBT for (N-N3) pieces of feedback information other than the N3 pieces of feedback information in the N pieces of feedback information. In this way, when the first terminal device successfully starts LBT for the N3 pieces of feedback information, and successfully starts LBT for the (N-N3) pieces of feedback information, the first terminal device sends the N pieces of feedback information.

The first terminal device may start one or more times of LBT for the (N-N3) pieces of feedback information. This is not limited in this embodiment of this application. For example, the first terminal device starts one time of LBT for the (N-N3) pieces of feedback information, or the first terminal device starts (N-N3) times of LBT for the (N-N3) pieces of feedback information.

In this embodiment of this application, if the resources for the N3 pieces of feedback information are located in a same time unit, the first terminal device starts same LBT for the N3 pieces of feedback information, so that transmission performance can be improved. For example, if the duration of the one time of LBT corresponding to the N3 pieces of feedback information is determined by the priority value of the feedback information with the highest priority in the N pieces of feedback information, the first terminal device may preempt a channel by using less time, thereby reducing a transmission delay of the feedback information. For another example, if the data corresponding to the N3 pieces of feedback information is from the same second terminal device, the second terminal device may receive the N3 pieces of feedback information at the same time, to determine a result of decoding the data corresponding to the N3 pieces of feedback information by the first terminal device.

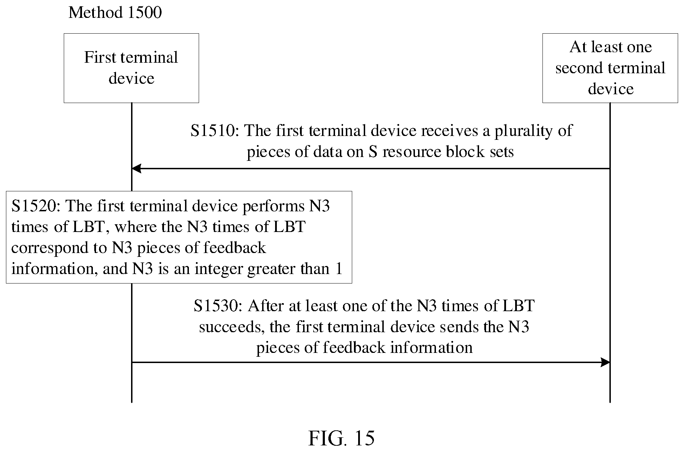

FIG. 15 is a schematic flowchart of a sidelink communication method 1500 according to an embodiment of this application. The method 1500 may include the following steps.

S1510: A first terminal device receives a plurality of pieces of data on S resource block sets.

S is an integer greater than 1. For ease of description, a quantity of the plurality of pieces of data is denoted as P, where P is an integer greater than 1.

For more descriptions of S1510, refer to S910 in the foregoing method 900.

S1520: The first terminal device performs N3 times of LBT.

The N3 times of LBT correspond to N3 pieces of feedback information in M pieces of feedback information, resources used to transmit the N3 pieces of feedback information are located in a same first time unit, and N3 is an integer greater than 1. The M pieces of feedback information correspond to the P pieces of data. For a correspondence between the P pieces of data and the M pieces of feedback information, refer to the foregoing description in S510. That the N3 times of LBT correspond to the N3 pieces of feedback information may also be understood as that the N3 times of LBT correspond to data corresponding to the N3 pieces of feedback information.

It should be noted that after the first terminal device decodes data or control information corresponding to each of the N3 pieces of feedback information, the first terminal device performs LBT corresponding to each piece of feedback information.

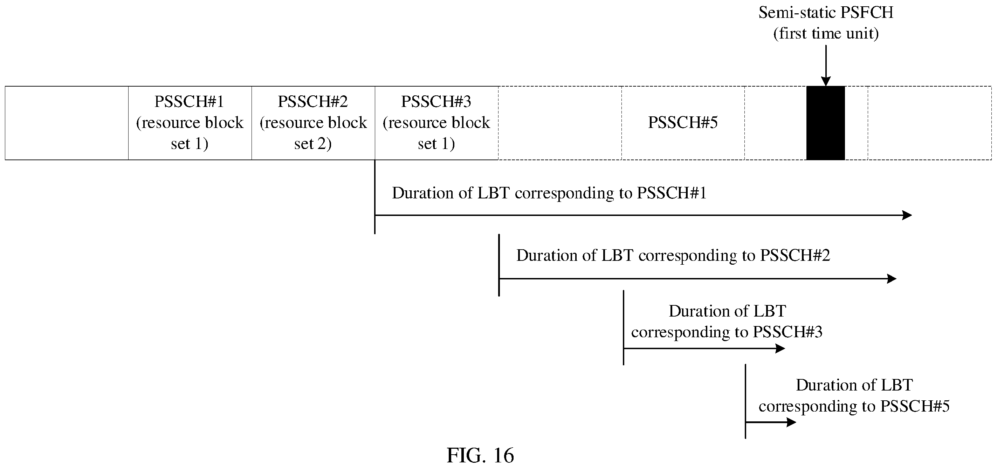

As shown in FIG. 16, after the first terminal device receives data#1 through PSSCH#1 and decodes data#1, the first terminal device starts one time of LBT for feedback information corresponding to data#1, which may also be referred to as LBT corresponding to PSSCH#1. After the first terminal device receives data#2 through PSSCH#2 and decodes data#2, the first terminal device starts one time of LBT for feedback information corresponding to data#2, which may also be referred to as LBT corresponding to PSSCH#2. After the first terminal device receives data#3 through PSSCH#3, and decodes data#3, the first terminal device starts one time of LBT for feedback information corresponding to data#3, which may also be referred to as LBT corresponding to PSSCH#3. After the first terminal device receives data#5 through PSSCH#5 and decodes data#5, the first terminal device starts one time of LBT for feedback information corresponding to data#5.

A type of LBT performed by the first terminal device is not limited in this embodiment of this application. For a procedure of performing LBT by the first terminal device, refer to the foregoing descriptions. For brevity, details are not described herein again.

It should be further noted that if all the resources used to transmit the M pieces of feedback information are located in the first time unit, the first terminal device determines N pieces of feedback information from the M pieces of feedback information according to the method 500 or the method 800, and then starts N3 times of LBT for the N3 pieces of feedback information in the N pieces of feedback information.

Optionally, resource block sets used to transmit the N3 pieces of feedback information are a same resource block set.

Optionally, at least two resource block sets used to transmit at least two of the N3 pieces of feedback information do not overlap. In other words, even if a resource for feedback information#A and a resource for feedback information#B are located in different resource block sets, provided that the resource for feedback information#A and the resource for feedback information#B are located in a same first time unit, the first terminal device may add feedback information#A and feedback information#B into the N3 pieces of feedback information.

Optionally, data corresponding to the N3 pieces of feedback information is from a same second terminal device. In other words, for a plurality of pieces of data from a same second terminal device, resources for feedback information corresponding to the plurality of pieces of data are located in a same first time unit, and the first terminal device starts same LBT for the feedback information corresponding to the plurality of pieces of data.

Optionally, the data corresponding to the N3 pieces of feedback information is received by the first terminal device before a target moment, and a gap between the target moment and the first time unit is a preset value. The preset value is determined by a capability of the first terminal device, and the preset value is greater than or equal to shortest duration from a moment at which the first terminal device receives the data to a moment at which the first terminal device starts to send the feedback information corresponding to the data. For example, for PSSCH transmission occurring in a slot n, if a corresponding PSFCH resource occurs in a slot (n+a), and the slot (n+a) is the first slot in which a PSFCH resource exists after a slot (n+K-1), a minimum gap between the PSFCH resource and a PSSCH resource is (K-1) slots, and it may be further determined that the preset value is at least (K-1) slots.

Optionally, the data corresponding to the N3 pieces of feedback information is same data.

S1530: After at least one of the N3 times of LBT succeeds, the first terminal device sends the N3 pieces of feedback information.

As shown in FIG. 16, before the first time unit, if the first terminal device successfully starts LBT for the feedback information corresponding to data#3, the first terminal device sends, in the first time unit and on the resource block set 1, the feedback information corresponding to data#1 and the feedback information corresponding to data#3, and sends, in the first time unit and on the resource block set 2, the feedback information corresponding to data#2. Before the first time unit, the first terminal device successfully starts LBT for data#5, but a resource for the feedback information corresponding to data#5 is not in the first time unit. Therefore, the first terminal device does not send, in the first time unit, the feedback information corresponding to data#5.

Optionally, at least one of the N3 times of LBT succeeds, and the first terminal device disables unsuccessful LBT in the N3 times of LBT.

Optionally, if the first terminal device determines the N pieces of feedback information from the M pieces of feedback information, the first terminal device may further start LBT for (N-N3) pieces of feedback information other than the N3 pieces of feedback information in the N pieces of feedback information. In this way, when the first terminal device successfully starts at least one of the N3 times of LBT for the N3 pieces of feedback information, and successfully starts LBT for the (N-N3) pieces of feedback information, the first terminal device sends the N pieces of feedback information.

The first terminal device may start one or more times of LBT for the (N-N3) pieces of feedback information. This is not limited in this embodiment of this application. For example, the first terminal device starts one time of LBT for the (N-N3) pieces of feedback information, or the first terminal device starts (N-N3) times of LBT for the (N-N3) pieces of feedback information.

In this embodiment of this application, if the resources for the N3 pieces of feedback information are located in a same time unit, the first terminal device starts the N3 times of LBT for the N3 pieces of feedback information, and when at least one of the N3 times of LBT succeeds, the first terminal device sends the N3 pieces of feedback information, so that transmission performance can be improved. For example, if duration of the N3 times of LBT corresponding to the N3 pieces of feedback information is different, LBT with shortest duration in the N3 times of LBT succeeds first, so that the first terminal device can send the N3 pieces of feedback information as soon as possible, and does not need to send the N3 pieces of feedback information after all times of LBT succeed, thereby reducing a transmission delay of the feedback information. For another example, if the data corresponding to the N3 pieces of feedback information is from the same second terminal device, the second terminal device may receive the N3 pieces of feedback information at the same time, to determine a result of decoding the data corresponding to the N3 pieces of feedback information by the first terminal device.

It may be understood that, in embodiments of this application, interaction between a first terminal device and a second terminal device is mainly used as an example for description. This application is not limited thereto.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that in the foregoing method embodiments, methods and operations implemented by a communication device may alternatively be implemented by a component (for example, a chip or a circuit) of the communication device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

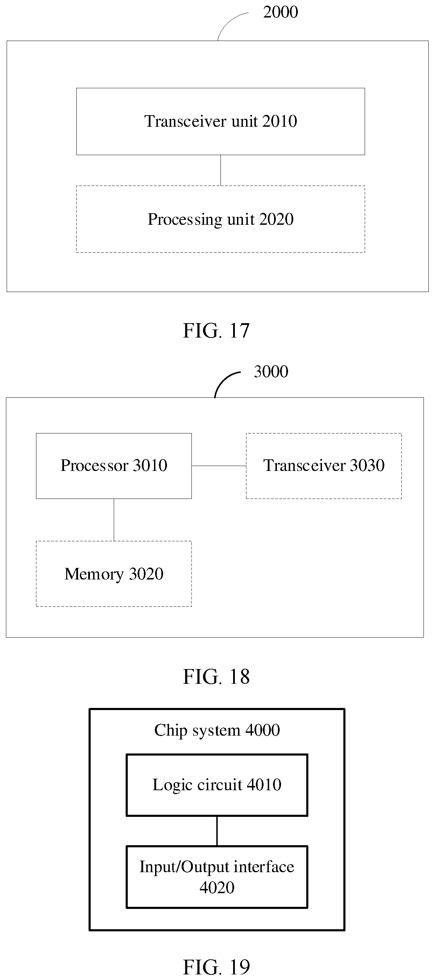

FIG. 17 is a block diagram of a communication apparatus 2000 according to an embodiment of this application. The apparatus 2000 includes a transceiver unit 2010. The transceiver unit 2010 may be configured to implement a corresponding communication function. The transceiver unit 2010 may also be referred to as a communication interface or a communication unit.

Optionally, the apparatus 2000 further includes a processing unit 2020, and the processing unit 2020 may be configured to perform data processing.

Optionally, the apparatus 2000 further includes a storage unit. The storage unit may be configured to store instructions and/or data. The processing unit 2020 may read the instructions and/or the data in the storage unit, so that the apparatus executes the actions of the terminal device in the foregoing method embodiments.

In a design, the apparatus 2000 may be the first terminal device in the foregoing embodiments, or may be a component (for example, a chip) of the first terminal device. The apparatus 2000 may implement steps or procedures performed by the first terminal device in the foregoing method embodiments. The transceiver unit 2010 may be configured to perform receiving/sending-related operations of the first terminal device in the foregoing method embodiments. The processing unit 2020 may be configured to perform processing-related operations of the first terminal device in the foregoing method embodiments.

In a possible implementation, the transceiver unit 2010 is configured to receive a plurality of pieces of data on S resource block sets, where resources used to transmit M pieces of feedback information are located in a first time unit and the S resource block sets, the M pieces of feedback information correspond to the plurality of pieces of data, and both S and M are integers greater than 1; and the transceiver unit 2010 is further configured to send at least one of N pieces of feedback information in the first time unit and on each of the S resource block sets, where the N pieces of feedback information belong to the M pieces of feedback information, and N is a positive integer less than or equal to M.

In another possible implementation, the transceiver unit 2010 is configured to receive a plurality of pieces of data on S resource block sets, where S is an integer greater than 1; and the transceiver unit 2010 is further configured to send N pieces of feedback information in M pieces of feedback information, where the M pieces of feedback information correspond to the plurality of pieces of data, and N is a positive integer less than or equal to M, where a phase rotation value corresponding to an $n^{th}$ piece of feedback information in the N pieces of feedback information is related to an index of a resource block set used to transmit the $n^{th}$ piece of feedback information, and n=1, 2, ..., N.

In another possible implementation, the transceiver unit 2010 is configured to receive a plurality of pieces of data on S resource block sets, where S is an integer greater than 1; the processing unit 2020 is configured to perform N3 times of LBT, where the N3 times of LBT correspond to N3 pieces of feedback information in M pieces of feedback information, the M pieces of feedback information correspond to the plurality of pieces of data, resources used to transmit the N3 pieces of feedback information are located in a same time unit, and N3 is an integer greater than 1; and the transceiver unit 2010 is further configured to: after at least one of the N3 times of LBT succeeds, send the N3 pieces of feedback information.

In another possible implementation, the transceiver unit 2010 is configured to receive a plurality of pieces of data on S resource block sets, where S is an integer greater than 1; the processing unit 2020 is configured to perform one time of LBT, where the one time of LBT corresponds to N3 pieces of feedback information in M pieces of feedback information, the M pieces of feedback information correspond to the plurality of pieces of data, resources used to transmit the N3 pieces of feedback information are located in a same time unit, and N3 is an integer greater than 1; and the transceiver unit 2010 is further configured to: after the one time of LBT succeeds, send the N3 pieces of feedback information.

The apparatus 2000 may implement steps or procedures performed by the first terminal device in the method embodiments corresponding to embodiments of this application. The apparatus 2000 may include units configured to perform the method performed by the first terminal device in the embodiment shown in FIG. 5, FIG. 8, FIG. 9, FIG. 11, or FIG. 15.

For more detailed descriptions of the apparatus 2000, refer to related descriptions in the foregoing method embodiments. Details are not described herein again.

It should be understood that a specific process in which the units perform the foregoing corresponding steps is described in detail in the foregoing method embodiments. For brevity, details are not described herein.

It should be understood that the apparatus 2000 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 2000 may be specifically the first terminal device in the foregoing embodiments, and may be configured to perform the procedures and/or steps corresponding to the first terminal device in the foregoing method embodiments. To avoid repetition, details are not described herein again.

The apparatus 2000 in the foregoing solutions has a function of implementing corresponding steps performed by the first terminal device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 2010 may alternatively be a transceiver circuit (for example, may include a receiving circuit and a sending circuit), and the processing unit may be a processing circuit.

It should be noted that the apparatus in FIG. 17 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 18 is a block diagram of a communication apparatus 3000 according to an embodiment of this application. The apparatus 3000 includes a processor 3010, and the processor 3010 is coupled to a memory 3020. Optionally, the apparatus further includes the memory 3020, configured to store a computer program or instructions and/or data. The processor 3010 is configured to execute the computer program or the instructions stored in the memory 3020, or read the data stored in the memory 3020, to perform the methods in the foregoing method embodiments.

Optionally, there are one or more processors 3010.

Optionally, there are one or more memories 3020.

Optionally, the memory 3020 and the processor 3010 are integrated together or disposed separately.

Optionally, as shown in FIG. 18, the apparatus 3000 further includes a transceiver 3030. The transceiver 3030 is configured to receive and/or send a signal. For example, the processor 3010 is configured to control the transceiver 3030 to receive and/or send a signal.

In a solution, the apparatus 3000 is configured to implement operations performed by the terminal device in the foregoing method embodiments.

For example, the processor 3010 is configured to execute the computer program or the instructions stored in the memory 3020, to implement the related operations of the first terminal device in the foregoing method embodiments.

In an implementation process, steps in the foregoing methods can be implemented by using a hardware integrated logic circuit in the processor 3010, or by using instructions in a form of software. The method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 3020, and the processor 3010 reads information in the memory 3020 and completes the steps in the foregoing methods in combination with hardware of the processor 3010. To avoid repetition, details are not described herein again.

It should be understood that, in embodiments of this application, the processor may be one or more integrated circuits, and is configured to execute a related program, to perform the method embodiments of this application.

A processor (for example, the processor 3010) may include one or more processors and be implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit, or another proper combination of hardware, firmware, and/or hardware and software, and is configured to perform various functions described in the present disclosure. The processor may be a general-purpose processor or a dedicated processor. For example, the processor 3010 may be a baseband processor or a central processing unit. The baseband processor may be configured to process a communication protocol and communication data. The central processing unit may be configured to enable the apparatus to execute a software program and process data in the software program. A part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application program, a software application program, or the like. The program may be run in a processor and/or a computer, to enable the apparatus to perform various functions and/or processes described in this application.

The memory (for example, the memory 3020) may store data required by the processor (for example, the processor 3010) during software execution. The memory may be implemented by using any suitable storage technology. For example, the memory may be any available storage medium that can be accessed by a processor and/or a computer. Non-limiting examples of the storage medium include: a random access memory (random access memory, RAM), a read-only memory (read-only memory, ROM), an electrically erasable programmable read-only memory (electrically EPROM, EEPROM), a compact disc read-only memory (Compact Disc - ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM) and a direct rambus random access memory (direct rambus RAM, DR RAM), a removable medium, an optical disc memory, a magnetic disk storage medium, a magnetic storage device, a flash memory, a register, a state memory, a remote mounted memory, a local or remote memory component, or any other medium capable of carrying or storing software, data, or information and accessible by a processor/computer. It should be noted that the memory described in this specification aims to include but is not limited to these memories and any memory of another appropriate type.

The memory (for example, the memory 3020) and the processor (for example, the processor 3010) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (where for example, the integrated circuit may be disposed in a terminal device or another network node).

FIG. 19 is a block diagram of a chip system 4000 according to an embodiment of this application. The chip system 4000 (or may be referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, so that the chip system 4000 can implement the methods and functions in embodiments of this application. The input/output interface 4020 may be an input/output circuit in the chip system 4000, and outputs information processed by the chip system 4000, or inputs to-be-processed data or signaling information to the chip system 4000 for processing.

In a solution, the chip system 4000 is configured to implement operations performed by the terminal device in the foregoing method embodiments.

For example, the logic circuit 4010 is configured to implement processing-related operations performed by the first terminal device in the foregoing method embodiments, for example, processing-related operations performed by the first terminal device in the embodiment shown in FIG. 5, FIG. 8, FIG. 9, FIG. 11, or FIG. 15. The input/output interface 4020 is configured to implement sending and/or receiving-related operations performed by the first terminal device in the foregoing method embodiments, for example, sending and/or receiving-related operations performed by the first terminal device in the embodiment shown in FIG. 5, FIG. 8, FIG. 9, FIG. 11, or FIG. 15.

An embodiment of this application further provides a computer-readable storage medium. The computer-readable storage medium stores computer instructions used to implement the methods performed by the first terminal device in the foregoing method embodiments.

An embodiment of this application further provides a computer program product, including instructions. When the instructions are executed by a computer, the methods performed by the first terminal device in the foregoing method embodiments are implemented.

An embodiment of this application further provides a communication system. The communication system includes the first terminal device and the second terminal device in the foregoing embodiments.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the apparatus embodiments described above are merely examples. For example, division of the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sidelink communication method, comprising:

    receiving, by a first terminal device, a plurality of pieces of data on S resource block sets, wherein resources used to transmit M pieces of feedback information are located in a first time unit and the S resource block sets, the M pieces of feedback information correspond to the plurality of pieces of data, and both S and M are integers greater than 1; and

sending, by the first terminal device, at least one of N pieces of feedback information in the first time unit and on each of the S resource block sets, wherein the N pieces of feedback information belong to the M pieces of feedback information, and N is a positive integer less than or equal to M.

2. The method according to claim 1, wherein the N pieces of feedback information comprise N1 pieces of feedback information, the N1 pieces of feedback information comprise feedback information with a highest priority transmitted on a $s^{th}$ resource block set in the S resource block sets, feedback information transmitted on the $s^{th}$ resource block set belongs to the M pieces of feedback information, N1 is a positive integer, and s=1, 2, ..., S.

3. The method according to claim 2, wherein the method further comprises:

   determining, by the first terminal device based on the M pieces of feedback information, S feedback information sets corresponding to the S resource block sets, wherein a $s^{th}$ feedback information set in the S feedback information sets comprises at least one of the M pieces of feedback information, and the $s^{th}$ resource block set is used to transmit feedback information comprised in a feedback information set corresponding to the $s^{th}$ resource block set; and
   determining, by the first terminal device, the N1 pieces of feedback information based on feedback information with a highest priority comprised in each of the S feedback information sets.

4. The method according to claim 2, wherein the method further comprises:
   determining, by the first terminal device, the N1 pieces of feedback information from the M pieces of feedback information in descending order of priorities of feedback information.

5. The method according to any one of claims 2 to 4, wherein if $N_{max}>N_1$, the N pieces of feedback information further comprise N2 pieces of feedback information in M' pieces of feedback information, a sum of transmit power corresponding to the N pieces of feedback information is less than maximum transmit power supported by the first terminal device, and/or N is less than or equal to $N_{max}$, the M' pieces of feedback information comprise feedback information other than the N1 pieces of feedback information in the M pieces of feedback information, and $N_{max}$ represents a maximum quantity of feedback information capable of being simultaneously sent by the first terminal device.

6. The method according to claim 1, wherein the method further comprises:

   determining, by the first terminal device based on the M pieces of feedback information, S feedback information sets corresponding to the S resource block sets, wherein a $s^{th}$ feedback information set in the S feedback information sets comprises at least one of the M pieces of feedback information, a $s^{th}$ resource block set is used to transmit feedback information comprised in a feedback information set corresponding to the $s^{th}$ resource block set, and s=1, 2, ..., S; and

   determining, by the first terminal device, the N pieces of feedback information based on $N_{max}^{set}$ and the S feedback information sets, wherein a quantity of feedback information that is in the N pieces of feedback information and that belongs to a same feedback information set does not exceed $N_{max}^{set}$, and $N_{max}^{set}$ represents a maximum quantity of feedback information capable of being simultaneously sent by the first terminal device on one resource block set.

7. The method according to claim 6, wherein a priority of feedback information that is in the N pieces of feedback information and that belongs to the $s^{th}$ feedback information set is higher than or equal to a priority of feedback information that is in the $s^{th}$ feedback information set and that does not belong to the N pieces of feedback information.

8. The method according to claim 6 or 7, wherein the method further comprises:
   sending, by the first terminal device to a network device, at least one of the following: a quantity of resource block sets supported by the first terminal device, and the maximum quantity of feedback information capable of being simultaneously sent by the first terminal device on one resource block set.

9. The method according to any one of claims 1 to 8, wherein before the first terminal device sends the N pieces of feedback information, the method further comprises:
determining, by the first terminal device, that the first time unit on each of the S resource block sets belongs to one channel occupancy time.

10. The method according to any one of claims 1 to 9, wherein a phase rotation value corresponding to an $n^{th}$ piece of feedback information in the N pieces of feedback information is related to an index of a resource block set used to transmit the $n^{th}$ piece of feedback information, wherein n=1, 2, ..., N.

11. The method according to claim 10, wherein a phase rotation value corresponding to the feedback information transmitted on the $s^{th}$ resource block set is different from a phase rotation value corresponding to feedback information transmitted on an s'th resource block set, and the $s^{th}$ resource block set and the s'th resource block set belong to the S resource block sets, wherein s=1, 2, ..., S, s'=1, 2, ..., S, and s≠s'.

12. The method according to claim 10 or 11, wherein the phase rotation value $\alpha_l^n$ corresponding to the $n^{th}$ piece of feedback information is represented as

$$\alpha_l^n = \frac{2\pi}{N_{sc}^{RB}}((m_0 + \Delta_{set}^n * i_{set}^n + m_{cs} + n_{cs}(n_{s,f}^\mu, l+l')) \bmod N_{sc}^{NB})$$

; or $\alpha_l^n$

is represented as

$$\alpha_l^n = \frac{2\pi}{N_{sc}^{RB}}((m_0 + \Delta_{set}^n * i^n + \Delta_{RB}^n * i_{RB}^n + m_{cs} + n_{cs}(n_{s,f}^\mu, l+l')) \bmod N_{sc}^{NB})$$

, wherein $\Delta_{set}^n$ represents an offset corresponding to the resource block set used to transmit the $n^{th}$ piece of feedback information, $i_{set}^n$ represents an index of the resource block set used to transmit the $n^{th}$ piece of feedback information, $\Delta_{RB}^n$ represents an offset corresponding to a resource block that is comprised in the resource block set used to transmit the $n^{th}$ piece of feedback information and that is used to transmit the $n^{th}$ piece of feedback information, $i^n$ represents an index of a physical resource block in an interlace comprised in the resource block set used to transmit the $n^{th}$ piece of feedback information, $i_{RB}^n$ represents an index of the resource block that is comprised in the resource block set used to transmit the $n^{th}$ piece of feedback information and that is used to transmit the $n^{th}$ piece of feedback information, $N_{sc}^{NB}$ represents a quantity of subcarriers in one resource block, $n_{s,f}^\mu$ represents a slot number corresponding to a subcarrier spacing $\mu$ in one radio frame, $l$ represents a number of a symbol of a resource used to transmit the $n^{th}$ piece of feedback information, $l$=0 represents a first symbol of the resource used to transmit the $n^{th}$ piece of feedback information, $l'$ represents a symbol index of the first symbol of the resource used to transmit the $n^{th}$ piece of feedback information in a slot, $m_0$ represents a phase of an acknowledgment ACK sequence in a physical sidelink feedback channel PSFCH resource pair, $m_{cs}$ represents a phase offset of a negative NACK sequence relative to an ACK sequence in a PSFCH resource pair, a function $n_{cs}(n_{s,f}^\mu, l)$ is represented as

$$n_{cs}(n_{s,f}^\mu, l) = \sum_{m=0}^{7} 2^m c(8N_{symb}^{slot} n_{s,f}^\mu + 8l + m), \quad N_{symb}^{slot}$$

represents a symbol quantity in one slot, and c(i) represents a value of a sequence number i in a pseudo-random sequence.

13. The method according to claim 12, wherein the offset corresponding to the resource block set used to transmit the $n^{th}$ piece of feedback information is related to one or more of the following: a quantity of resource block sets comprised in a resource pool, a frequency domain range of the resource pool, and a frequency domain position of the resource pool, wherein the resource pool comprises the resource block set used to transmit the $n^{th}$ piece of feedback information.

14. The method according to any one of claims 1 to 13, wherein before the first terminal device sends the N pieces of feedback information, the method further comprises:

performing, by the first terminal device, N3 times of listen-before-talk LBT, wherein the N3 times of LBT correspond to N3 pieces of feedback information in the N pieces of feedback information, N3 is an integer, and 1<N3≤N; and
the sending, by the first terminal device, at least one of N pieces of feedback information in the first time unit and on each of the S resource block sets comprises:
after at least one of the N3 times of LBT succeeds, sending, by the first terminal device, at least one of the N pieces of feedback information in the first time unit and on each of the S resource block sets.

15. The method according to any one of claims 1 to 13, wherein before the first terminal device sends the N pieces of feedback information, the method further comprises:

    performing, by the first terminal device, one time of LBT, wherein the LBT corresponds to N3 pieces of feedback information in the N pieces of feedback information, N3 is an integer, and $1 < N3 \leq N$; and
    the sending, by the first terminal device, at least one of N pieces of feedback information in the first time unit and on each of the S resource block sets comprises:
    after the LBT succeeds, sending, by the first terminal device, at least one of the N pieces of feedback information in the first time unit and on each of the S resource block sets.

16. The method according to claim 14 or 15, wherein resource block sets used to transmit the N3 pieces of feedback information are a same resource block set, or at least two resource block sets used to transmit at least two of the N3 pieces of feedback information do not overlap.

17. The method according to any one of claims 14 to 16, wherein data corresponding to the N3 pieces of feedback information is from a same second terminal device.

18. The method according to any one of claims 14 to 17, wherein the data corresponding to the N3 pieces of feedback information is received by the first terminal device before a target moment, and a gap between the target moment and the first time unit is a preset value.

19. The method according to any one of claims 14 to 18, wherein the data corresponding to the N3 pieces of feedback information is same data.

20. A communication apparatus, comprising a module or a unit configured to perform the method according to any one of claims 1 to 19.

21. A communication apparatus, comprising a processor, wherein the processor is configured to execute a computer program or instructions stored in a memory, to enable the apparatus to perform the method according to any one of claims 1 to 19.

22. The apparatus according to claim 21, wherein the apparatus further comprises the memory and/or a communication interface, and the communication interface is coupled to the processor; and
    the communication interface is configured to input and/or output information.

23. A computer-readable storage medium, wherein the computer-readable storage medium stores a computer program or instructions; and when the computer program is run or the instructions are run on a communication apparatus, the communication apparatus is enabled to perform the method according to any one of claims 1 to 19.

24. A computer program product, wherein the computer program product comprises a computer program or instructions used to perform the method according to any one of claims 1 to 19.

25. A chip, wherein the chip is coupled to a memory, and is configured to read and execute program instructions stored in the memory, to implement the method according to any one of claims 1 to 19.

FIG. 1

N=1

N=2

N=4

One slot

Feedback resource

FIG. 2

FIG. 3

PSFCH
resource

| Resource block set 3 | PSSCH#3 | | |
| Resource block set 2 | PSSCH#2 | | |
| Resource block set 1 | PSSCH#1 | | |
| Resource block set 0 | PSSCH#0 | | |

FIG. 4

Method 500

First terminal device

At least one second terminal device

S510: The first terminal device receives a plurality of pieces of data on S resource block sets, where resources used to transmit M pieces of feedback information are located in the S resource block sets and a first time unit, and the M pieces of feedback information correspond to the plurality of pieces of data

S520: Determine that the first time unit on each of the S resource block sets belongs to one COT

S530: The first terminal device sends at least one of N pieces of feedback information in the first time unit and on each of the S resource block sets, where the N pieces of feedback information belong to the M pieces of feedback information

FIG. 5

(a)

(b)

FIG. 6

FIG. 7

Method 800

| Network device | First terminal device | | At least one second terminal device |

S810: First
information

S820: The first terminal device receives a plurality of pieces of data on S resource block sets, where resources used to transmit M pieces of feedback information are located in the S resource block sets and a first time unit, and the M pieces of feedback information correspond to the plurality of pieces of data

S830: Determine that the first time unit on each of the S resource block sets belongs to one COT

S840: The first terminal device sends at least one of N pieces of feedback information in the first time unit and on each of the S resource block sets, where the N pieces of feedback information belong to the M pieces of feedback information

FIG. 8

Method 900

First terminal device

At least one second terminal device

S910: The first terminal device receives a plurality of pieces of data on S resource block sets

S920: The first terminal device sends N pieces of feedback information in M pieces of feedback information, where the M pieces of feedback information correspond to the plurality of pieces of data, where a phase rotation value corresponding to an nth piece of feedback information in the N pieces of feedback information is related to an index of a resource block set used to transmit the nth piece of feedback information

FIG. 9

Slot n

Resource block set 3 | PSSCH#3 → Phase offset 3
Resource block set 2 | PSSCH#2 → Phase offset 2
Resource block set 1 | PSSCH#1 → Phase offset 1
Resource block set 0 | PSSCH#0 → Phase offset 0

FIG. 10

Method 1100

```
┌─────────────────┐                                          ┌─────────────────┐
│  First terminal │                                          │  At least one   │
│     device      │                                          │ second terminal │
│                 │                                          │     device      │
└────────┬────────┘                                          └────────┬────────┘
         │                                                            │
         │      S1110: The first terminal device receives a plurality │
         │             of pieces of data on S resource block sets      │
         │◄───────────────────────────────────────────────────────────┤
         │                                                            │
┌────────┴───────────────────────────────────┐                       │
│ S1120: The first terminal device performs   │                       │
│ one time of LBT, where the one time of LBT  │                       │
│ corresponds to N3 pieces of feedback        │                       │
│ information, and N3 is an integer greater   │                       │
│ than 1                                      │                       │
└────────┬───────────────────────────────────┘                       │
         │                                                            │
         │      S1130: After the LBT succeeds, the first terminal      │
         │      device sends the N3 pieces of feedback information      │
         ├───────────────────────────────────────────────────────────►│
         │                                                            │
```

FIG. 11

Semi-static PSFCH
(first time unit)

| | PSSCH#1 (resource block set 1) | PSSCH#2 (resource block set 1) | PSSCH#3 (resource block set 2) | | PSSCH#5 | | █ | |

Duration of LBT corresponding to
PSSCH#1 and PSSCH#2

Duration of LBT
corresponding to PSSCH#3

(a)

Semi-static PSFCH
(first time unit)

| | PSSCH#1 (resource block set 1) | PSSCH#2 (resource block set 1) | PSSCH#3 (resource block set 2) | | PSSCH#5 | | █ | |

Duration of LBT corresponding to PSSCH#1,
PSSCH#2, and PSSCH#3

(b)

FIG. 12

EP 4 583 435 A1

FIG. 13

Semi-static PSFCH
(first time unit)

Target moment

|←————2 slots————→|

| | PSSCH#1 (resource block set 1) | PSSCH#2 (resource block set 1) | PSSCH#3 (resource block set 2) | | | PSSCH#5 | | ▮ | |

Duration of LBT corresponding to
PSSCH#1, PSSCH#2, and PSSCH#3

FIG. 14

Method 1500

```
┌─────────────┐                                    ┌─────────────┐
│First terminal│                                   │  At least one │
│   device    │                                    │second terminal│
│             │                                    │   device    │
└──────┬──────┘                                    └──────┬──────┘
       │   S1510: The first terminal device receives a plurality of │
       │◄──────── pieces of data on S resource block sets ──────────│
       │                                                   │
┌──────┴──────────────────────────────────┐               │
│S1520: The first terminal device performs N3│             │
│times of LBT, where the N3 times of LBT    │             │
│correspond to N3 pieces of feedback        │             │
│information, and N3 is an integer greater than 1│        │
└──────┬──────────────────────────────────┘               │
       │   S1530: After at least one of the N3 times of LBT │
       │── succeeds, the first terminal device sends the N3 ──►│
       │      pieces of feedback information                │
       │                                                   │
```

FIG. 15

EP 4 583 435 A1

Semi-static PSFCH
(first time unit)

| | PSSCH#1 (resource block set 1) | PSSCH#2 (resource block set 2) | PSSCH#3 (resource block set 1) | | PSSCH#5 | | ▮ | |

Duration of LBT corresponding to PSSCH#1

Duration of LBT corresponding to PSSCH#2

Duration of LBT corresponding to PSSCH#3

Duration of LBT corresponding to PSSCH#5

FIG. 16

2000

Transceiver unit 2010

Processing unit 2020

FIG. 17

3000

Processor 3010

Transceiver 3030

Memory 3020

FIG. 18

Chip system 4000

Logic circuit 4010

Input/Output interface 4020

FIG. 19

## INTERNATIONAL SEARCH REPORT

International application No.

**PCT/CN2023/119025**

### A. CLASSIFICATION OF SUBJECT MATTER

H04L1/00(2006.01)i; H04W72/00(2023.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNABS; CNTXT; WOTXT; EPTXT; USTXT; VEN; 3GPP; IEEE: 反馈, 资源, 集合, 组, 侧行, 直连, 物理侧行链路反馈信道, 物理侧行链路共享信道, 优先级, 最大, 数量, 数目, 个数, 功率, 相位, 先听后说, feedback, ack, nack, HARQ, resource, set, group, sidelink, SL, V2X, PSFCH, PSSCH, priority, CAPC, max+, number, power, phase, LBT

### C. DOCUMENTS CONSIDERED TO BE RELEVANT

| Category* | Citation of document, with indication, where appropriate, of the relevant passages | Relevant to claim No. |
|---|---|---|
| X | US 2022248425 A1 (LG ELECTRONICS INC.) 04 August 2022 (2022-08-04) description, paragraphs 128-212 and 282-297 | 1-9, 14-25 |
| X | INTEL CORP. "Discussion on NR V2X Multiple Link PSCCH/PSSCH decoding capability requirements" *3GPP TSG-RAN WG4 Meeting #98-bis-e R4-2106424*, 03 April 2021 (2021-04-03), section 2 | 1-9, 14-25 |
| X | WO 2021196237 A1 (GUANGDONG OPPO MOBILE COMMUNICATIONS CO., LTD.) 07 October 2021 (2021-10-07) description, paragraphs 92-95 | 1-4, 9, 14-25 |
| A | CN 114009070 A (BEIJING XIAOMI MOBILE SOFTWARE CO., LTD.) 01 February 2022 (2022-02-01) entire document | 1-25 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 November 2023** | **08 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/119025**

| Patent document cited in search report | | | Publication date (day/month/year) | Patent family member(s) | | | Publication date (day/month/year) |
|---|---|---|---|---|---|---|---|
| US | 2022248425 | A1 | 04 August 2022 | WO | 2020222514 | A1 | 05 November 2020 |
| WO | 2021196237 | A1 | 07 October 2021 | US | 2023085264 | A1 | 16 March 2023 |
| | | | | EP | 4132153 | A1 | 08 February 2023 |
| | | | | EP | 4132153 | A4 | 26 April 2023 |
| | | | | CN | 115362729 | A | 18 November 2022 |
| | | | | CN | 116170117 | A | 26 May 2023 |
| CN | 114009070 | A | 01 February 2022 | WO | 2023044938 | A1 | 30 March 2023 |

Form PCT/ISA/210 (patent family annex) (July 2022)

**REFERENCES CITED IN THE DESCRIPTION**

**Patent documents cited in the description**

- CN 202211140291

- CN 202211210216